# EUROPEAN PATENT APPLICATION

(11) **EP 4 676 008 A1**
(43) Date of publication of application: **07.01.2026**
(21) Application number: 24785055.5
(22) Date of filing: 12.03.2024
(51) Int. Cl.: H04L 67/14, H04L 41/0894, H04W 76/22, H04W 88/14, H04L 43/0811

(54) **METHOD AND APPARATUS FOR TRANSMITTING UE POLICY BETWEEN NETWORK AND UE**

(30) Priority: 06.04.2023 KR 20230045231
(71) Applicant: Samsung Electronics Co., Ltd., Suwon-si, Gyeonggi-do 16677 (KR)
(72) Inventor: KIM, Dongyeon, Suwon-si, Gyeonggi-do 16677 (KR); LEE, Jicheol, Suwon-si, Gyeonggi-do 16677 (KR)
(74) Representative: Gulde & Partner
(86) International application number: PCT/KR2024/003124
(87) International publication number: WO 2024/210346

(57) **Abstract**

The present disclosure relates to a method and an apparatus for transmitting a UE policy between a network and a UE in a wireless communication system. The method performed by a first network entity, according to an embodiment of the present disclosure, comprises the steps of: receiving a session management policy control update notify request message including UE policy information from a second network entity that performs a policy management function for a protocol data unit session; initiating a bearer modification procedure; receiving the outcome of UE policy delivery from the UE; and transmitting, to the second network entity, a session management policy control update request message including the outcome of the UE policy delivery.

## Description

### [Technical Field]

The disclosure relates to an operation of a user equipment (UE) and a network entity in a wireless communication system. More particularly, the disclosure relates to a method and apparatus for transmitting a UE policy between a network and a UE.

### [Background Art]

5G mobile communication technology defines a wide frequency band to enable fast transmission speed and new services, and may be implemented not only in a sub-6 GHz frequency band ("sub 6 GHz") such as 3.5 GHz but also in an ultra-high frequency band ("above 6 GHz") called mmWave such as 28 GHz or 39 GHz. In addition, 6G mobile communication technology called "beyond 5G system" is being considered for implementation in a terahertz (THz) band (e.g., band of 95 GHz to 3 THz) to achieve transmission speed that is 50 times faster and ultra-low latency that is reduced to 1/10 compared with 5G mobile communication technology.

In the early days of 5G mobile communication technology, to meet service support and performance requirements for enhanced mobile broadband (eMBB), ultra-reliable and low-latency communication (URLLC), and massive machine-type communications (mMTC), standardization has been carried out regarding beamforming for mitigating the pathloss of radio waves and increasing the propagation distance thereof in the mmWave band, massive MIMO, support of various numerology for efficient use of ultra-high frequency resources (e.g., operating multiple subcarrier spacings), dynamic operations on slot formats, initial access schemes to support multi-beam transmission and broadband, definition and operation of bandwidth parts (BWP), new channel coding schemes such as low density parity check (LDPC) codes for large-capacity data transmission and polar codes for reliable transmission of control information, L2 pre-processing, and network slicing for providing a dedicated network specialized for a specific service.

Currently, discussions are underway to improve 5G mobile communication technology and enhance performance thereof in consideration of the services that the 5G mobile communication technology has initially intended to support, and physical layer standardization is in progress for technologies such as Vehicle-to-Everything (V2X) that aims to help a self-driving vehicle to make driving decisions based on its own location and status information transmitted by vehicles and to increase user convenience, new radio unlicensed (NR-U) for the purpose of system operation that meets various regulatory requirements in unlicensed bands, low power consumption scheme for NR terminals (UE power saving), non-terrestrial network (NTN) as direct terminal-satellite communication to secure coverage in an area where communication with a terrestrial network is not possible, and positioning.

In addition, standardization in radio interface architecture/protocol is in progress for technologies such as intelligent factories (industrial Internet of things (IIoT)) for new service support through linkage and convergence with other industries, integrated access and backhaul (IAB) that provides nodes for network service area extension by integrating and supporting wireless backhaul links and access links, mobility enhancement including conditional handover and dual active protocol stack (DAPS) handover, 2-step random access 2-step RACH for NR) that simplifies the random access procedure; and standardization in system architecture/service is also in progress for the 5G baseline architecture (e.g., service based architecture, service based interface) for integrating network functions virtualization (NFV) and software defined networking (SDN) technologies, and mobile edge computing (MEC) where the terminal receives a service based on its location.

When such a 5G mobile communication system is commercialized, connected devices whose number is explosively increasing will be connected to the communication networks; accordingly, it is expected that enhancement in function and performance of the 5G mobile communication system and the integrated operation of the connected devices will be required. To this end, new research will be conducted regarding 5G performance improvement and complexity reduction, AI service support, metaverse service support, and drone communication by utilizing extended reality (XR) for efficiently supporting augmented reality (AR), virtual reality (VR), and mixed reality (MR), artificial intelligence (AI), and machine learning (ML).

Further, such advancement of 5G mobile communication systems will be the basis for the development of technologies such as new waveforms for ensuring coverage in the terahertz band of 6G mobile communication technology, full dimensional MIMO (FD-MIMO), multi-antenna transmission such as array antenna or large scale antenna, metamaterial-based lenses and antennas for improved coverage of terahertz band signals, high-dimensional spatial multiplexing using orbital angular momentum (OAM), reconfigurable intelligent surface (RIS) technique, full duplex technique to improve frequency efficiency and system network of 6G mobile communication technology, satellites, AI-based communication that utilizes artificial intelligence (AI) from the design step and internalizes end-to-end AI support functions to realize system optimization, and next-generation distributed computing that realizes services whose complexity exceeds the limit of terminal computing capabilities by utilizing ultra-high-performance communication and computing resources.

To meet the increasing demand for wireless data traffic since commercialization of a 4G communication system, efforts are being made to develop an improved 5G communication system or a pre-5G communication system. For this reason, the 5G communication system or the pre-5G communication system is also called beyond 4G network communication system or a post LTE system. The 5G communication specified in 3rd Generation Partnership Project (3GPP) is called a new radio (NR) system.

To achieve a high data transmission rate, the 5G communication system is being considered for implementation in ultra-high frequency (mmWave) band (e.g., 60 gigahertz (GHz) band). To alleviate pathloss of radio waves in the ultra-high frequency band and to increase the transmission distance of radio waves, beamforming, massive multiple input multiple output (MIMO), full dimensional MIMO (FD-MIMO), array antenna, analog beamforming, and large scale antenna technologies have been discussed in the 5G communication system and applied to the NR system.

Also, to improve the network of the system, technologies are being developed in the 5G communication system, such as evolved small cell, advanced small cell, cloud radio access network (cloud RAN), ultra-dense network, device to device (D2D) communication, wireless backhaul, moving network, cooperative communication, coordinated multi-points (CoMP), and interference cancellation.

In addition, in the 5G system, advanced coding modulation (ACM) scheme such as hybrid FSK and QAM modulation (FQAM) and sliding window superposition coding (SWSC), and advanced access technology, such as filter bank multi carrier (FBMC), non-orthogonal multiple access (NOMA), and sparse code multiple access (SCMA), are being developed.

Meanwhile, the Internet is evolving from a human-centric connection network in which humans create and consume information to an Internet of things (IoT) network in which information is exchanged and processed among distributed components such as objects. Internet of everything (IoE) technology that combines IoT technology with bigdata processing technology through connection to a cloud server is also emerging. To implement IoT, technical elements such as sensing technology, wired/wireless communication and network infrastructure, service interface technology, and security technology are required and technologies such as a sensor network for connection between objects, machine to machine (M2M), and machine type communication (MTC) are currently being studied. In an IoT environment, intelligent Internet technology (IT) services may be provided that collect and analyze data generated from connected objects to create a new value in human life. IoT may be applied to the fields, such as smart home, smart building, smart city, cart car or connected car, smart grid, healthcare, smart home appliances, and advanced medical services, through convergence and integration between the existing IT technology and various industries.

Therefore, various attempts are being made to apply the 5G communication system to the IoT network. For example, 5G communication, such as sensor network, M2M, and MTC, are being implemented using techniques such as beamforming, MIMO, and array antenna. Application of cloud radio access network (RAN) as bigdata processing technology may be an example of convergence of 5G technology and IoT technology.

### [Disclosure of Invention]

### [Technical Problem]

The disclosure is conceived to solve the above-described problems and aims to provide a method for a network to detect a connection status between a user equipment (UE) and the network in a wireless communication system.

More specifically, the disclosure proposes a procedure that enables a network to detect a connection status between a UE and the network and the change therein when the network determines that there is a probability that UE policy is not normally delivered to the UE.

All of 5G system (5GS) of which commercialization is ongoing and LTE and LTE-A systems that currently provide mobile communication services are wireless communication systems that provide packet-based services. This 5GS is being developed to support interworking with an evolved packet system (EPS) based on LTE and LTE-A. In the 5G system, a 5G core (5GC) network may provide UE policy information to the UE.

In the current 5G system, UE policy information determined by a policy control function (PCF) may be provided to the UE through an access and management function (AMF), and the PCF may store the UE policy information provided to the UE in a user data repository (UDR). The PCF may perform a function of managing the UE policy information provided to the UE, stored in the UDR to be up to date such that it may be maintained identical to the UE policy information actually stored in the UE. In the 5G system that supports EPC interworking, when the network and the UE support this, the UE policy information may be delivered to the UE through an EPC entity (e.g., session management function and packet data network gateway-control (SMF+PGW-C), mobility management entity (MME)).

Meanwhile, the UE policy may not be normally transmitted to the UE depending on various events and conditions that may occur in the network. Due to this, there is a probability that UE policy information in the network and UE policy information stored in the UE may not match, which may cause a problem that the UE policy information stored in the network may no longer be trusted when the PCF manages the UE policy.

Therefore, the disclosure proposes the procedure that enables the network to detect the connection status between the network and the UE and the change therein when the network determines that there is a probability that the UE policy may not be normally delivered to the UE.

Also, the disclosure provides a method and apparatus that enables a PCF managing a UE policy in a wireless communication system to provide a policy control request trigger (PCRT) to a PCF managing a session management policy and enables the PCF managing the session management policy to provide the PCRT to an SMF+PGW-C, to detect a connection status between a UE and a network and the change therein.

Also, the disclosure provides a method and apparatus that enables a PCF and/or SMF+PGW-C managing UE policy in a wireless communication system to store, retain, and manage UE policy information not normally delivered to a UE and to retransmit the UE policy to the UE depending on a connection status between the UE and a network.

Technical subjects to be achieved in the disclosure are not limited to technical subjects described above and still other technical subjects not described may be clearly understood by one skilled in the art to which the disclosure pertains from the following description.

### [Solution to Problem]

The disclosure is conceived to address the above-described problems and a method performed by a first network entity that performs a session management function and packet data network gateway-control (SMF+PGW-C) in a wireless communication system includes receiving, from a second network entity that performs a policy control function for a packet data unit session (PCF for a PDU session), a session management policy control update notify request message that includes user equipment (UE) policy information; initiating a bearer modification procedure; receiving the outcome of UE policy delivery from a UE; and transmitting, to the second network entity, a session management (SM) policy control update request message that includes the outcome of UE policy delivery.

The disclosure is conceived to address the above-described problems and a method performed by a second network entity that performs a policy control function for a packet data unit session (PCF for a PDU session) in a wireless communication system includes:
receiving, from a third network entity that performs a policy control function for a user equipment (PCF for a UE), a UE policy control update notify request message that includes UE policy information;
transmitting, to a first network entity that performs a session management function and packet data network gateway-control (SMF+PGW-C), a session management policy control update notify request message that includes UE policy information;
receiving, from the first network entity, a session management policy control update request message that includes the outcome of UE policy delivery; and
transmitting, to a third network entity that performs a policy control function for a user equipment (PCF for a UE), a UE policy control update request message that includes the outcome of UE policy delivery.

The disclosure is conceived to address the above-described problems and a method performed by a third network entity that performs a policy control function for a user equipment (PCF for a UE) in a wireless communication system includes transmitting, to a second network entity that performs a policy control function for a packet data unit session (PCF for a PDU session), a UE policy control update notify request message that includes UE policy information; and receiving, from the second network entity, a UE policy control update request message that includes the outcome of UE policy delivery.

The disclosure is conceived to address the above-described problems and a first network entity that performs a session management function and packet data network gateway-control (SMF+PGW-C) function in a wireless communication system includes a transceiver configured to transmit and receive signals; and a controller, and the controller wherein the controller receives, from a second network entity that performs a policy control function for a packet data unit session (PCF for a PDU session), a session management policy control update notify request message that includes UE policy information, initiates a bearer modification procedure, receives the outcome of UE policy delivery from a UE, and transmits, to the second network entity, a session management policy control update request message that includes the outcome of UE policy delivery.

The disclosure is conceived to address the above-described problems and a second network entity that performs a policy control function for a packet data unit session (PCF for a PDU session) in a wireless communication system includes a transceiver configured to transmit and receive signals; and a controller, wherein the controller receives, from a third network entity that performs a policy control function for a user equipment (PCF for a UE), a UE policy control update notify request message that includes UE policy information, transmits, to a first network entity that performs a session management function and packet data network gateway-control (SMF+PGW-C), a session management policy control update notify request message that includes UE policy information, receives, from the first network entity, an SM policy control update request message that includes the outcome of UE policy delivery, and transmits, to a third network entity that performs a policy control function for a user equipment (PCF for a UE), a UE policy control update request message that includes the outcome of UE policy delivery.

The disclosure is conceived to address the above-described problems and a third network entity that performs a policy control function for a user equipment (PCF for a UE) in a wireless communication system includes a transceiver configured to transmit and receive signals; and a controller, wherein the controller is configured to transmit, to a second network entity that performs a policy control function for a packet data unit session (PCF for a PDU session), a UE policy control update notify request message that includes UE policy information, and to receive, from the second network entity, a UE policy control update request message that includes the outcome of UE policy delivery.

### [Advantageous Effects of Invention]

According to the disclosure, a network may detect a connection status between a user equipment (UE) and the network and the change therein.

Effects to be acquirable from the disclosure are not limited to effects described above and still other effects not described may be clearly understood by one skilled in the art to which the disclosure pertains from the following description.

### [Brief Description of Drawings]

FIG. 1 illustrates a network structure and interface of a wireless communication system according to an embodiment of the disclosure.
FIG. 2 illustrates a network structure and interface of a wireless communication system that supports interworking between an evolved packet system (EPS) and a 5G system (5GS) according to an embodiment of the disclosure.
FIG. 3a illustrates a user equipment (UE) policy transmission procedure between a network and a UE according to an embodiment of the disclosure.
FIG. 3b illustrates a UE policy transmission procedure between a network and a UE according to an embodiment of the disclosure.
FIG. 3c illustrates a UE policy transmission procedure between a network and a UE according to an embodiment of the disclosure.
FIG. 3d illustrates a UE policy transmission procedure between a network and a UE according to an embodiment of the disclosure.
FIG. 4a illustrates a UE policy transmission procedure between a network and a UE according to an embodiment of the disclosure.
FIG. 4b illustrates a UE policy transmission procedure between a network and a UE according to another embodiment of the disclosure.
FIG. 4c illustrates a UE policy transmission procedure between a network and a UE according to another embodiment of the disclosure.
FIG. 4d illustrates a UE policy transmission procedure between a network and a UE according to another embodiment of the disclosure.
FIG. 5a illustrates a UE policy transmission procedure between a network and a UE according to another embodiment of the disclosure.
FIG. 5b illustrates a UE policy transmission procedure between a network and a UE according to another embodiment of the disclosure.
FIG. 5c illustrates a UE policy transmission procedure between a network and a UE according to another embodiment of the disclosure.
FIG. 5d illustrates a UE policy transmission procedure between a network and a UE according to another embodiment of the disclosure.
FIG. 5e illustrates a UE policy transmission procedure between a network and a UE according to another embodiment of the disclosure.
FIG. 5f illustrates a UE policy transmission procedure between a network and a UE according to another embodiment of the disclosure.
FIG. 6 is a diagram illustrating a constitution of a network device according to embodiments of the disclosure.
FIG. 7 is a diagram illustrating a constitution of a base station according to embodiments of the disclosure.
FIG. 8 is a diagram illustrating a constitution of a UE according to embodiments of the disclosure.

### [Mode for the Invention]

Hereinafter, preferable embodiments of the disclosure are described in detail with reference to the accompanying drawings. Here, it should be noted that, where possible, like components in the attached drawings are represented by like reference numerals. Also, the drawings of the present invention attached below are provided to help understanding of the present invention, and it should be understood that the present invention is not limited to the form or arrangement exemplified in the drawings of the present invention. Also, detailed description of known functions and configurations that may obscure the gist of the present invention will be omitted. It should be noted that the following description describes only a portion necessary to understand the operation according to various embodiments of the present invention and description of other portions will be omitted to not obscure the gist of the present invention. Also, although the disclosure describes various embodiments using terms used in some communication standards (e.g., 3rd Generation Partnership Project (3GPP)), it is provided as example only for description. Various embodiments of the disclosure may be easily modified and applied to other communication systems.

Herein, it will be understood that each block of flowchart illustrations and combinations of blocks in the flowchart illustrations may be implemented by computer program instructions. These computer program instructions may be provided to a processor of a general-purpose computer, a special purpose computer, or other programmable data processing apparatus to produce a machine, such that the instructions, executed via the processor of the computer or other programmable data processing apparatus, create a method for implementing the functions specified in the flowchart block(s). These computer program instructions may also be stored in a computer usable or computer-readable memory that may direct a computer or other programmable data processing apparatus to function in a particular manner, such that the instructions stored in the computer usable or computer-readable memory produce an article of manufacture including instruction implies that implement the function specified in the flowchart block(s). The computer program instructions may also be loaded onto a computer or other programmable data processing apparatus to cause a series of operational steps to be performed on the computer or other programmable apparatus to produce a computer implemented process such that the instructions executed on the computer or other programmable apparatus provide steps for implementing the functions described in the flowchart block(s).

Also, each block may represent a module, a segment, or a portion of code, which includes one or more executable instructions for implementing the specified logical function(s). It should also be noted that in some alternative implementations, the functions noted in the blocks may occur out of order. For example, two blocks shown in succession may in fact be executed simultaneously or the blocks may sometimes be executed in the reverse order, depending on the functionality involved.

Here, the term "unit" used herein refers to a software component or a hardware component, such as a field programmable gate array (FPGA) or an application specific integrated circuit (ASIC), which performs a predetermined function. However, the term "unit" does not always have a meaning limited to software or hardware. "Unit" may be configured either to be stored in an addressable storage medium or to execute one or more processors. Therefore, "unit" includes, for example, components such as software components, object-oriented software components, class components, and task components, processes, functions, properties, procedures, sub-routines, segments of a program code, drivers, firmware, micro-codes, circuits, data, database, data structures, tables, arrays, and parameters. The components and functions provided by the "unit" may be combined into a smaller number of components and "units", or further divided into additional components and "units". In addition, the components and "units" may be implemented to reproduce one or more CPUs within a device or a security multimedia card. Also, the term "unit" in the embodiments may include one or more processors.

Herein, each of phrases, "A and/or B", "A or B", "and at least one of B", "or at least one of B", "B or C", "at least one of B and C", and "B, or at least one of C" may include any one of items listed with a corresponding phrase, or all possible combinations thereof. Terms, such as "first" and "second", may be simply used to distinguish one component from another component and do not limit the components in other aspect (e.g., importance or order).

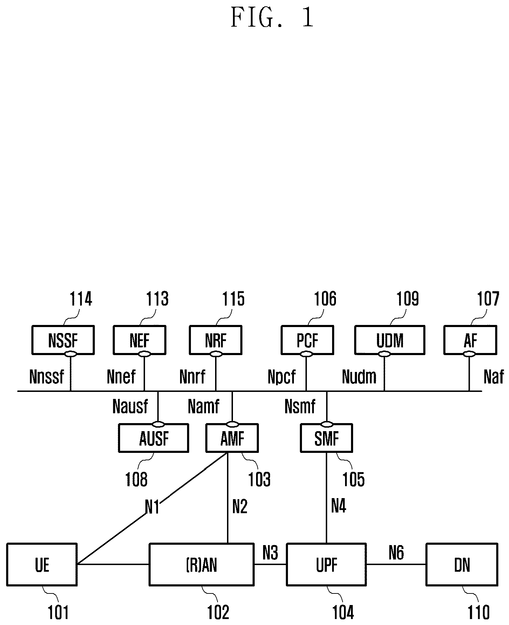

Herein, network technology may refer to standard specifications (e.g., TS 23.501, TS 23.502, TS 23.503, etc.) defined by the International Telecommunication Union (ITU) or 3rd Generation Partnership Project (3GPP), and components included in a network structure of FIG. 1 described below may represent physical entities or may represent software performing an individual function or hardware combined with software. In drawings, reference numerals, illustrated as Nx, such as N1, N2, N3,..., represent known interfaces between network functions (NFs) in a 5G core network (CN).

All of 5G system (5GS) of which commercialization is ongoing and LTE and LTE-A systems that currently provide mobile communication services are wireless communication systems that provide packet-based services. This 5GS is being developed to support interworking with an evolved packet system (EPS) based on LTE and LTE-A. In the 5G system, a 5G core (5GC) network may provide UE policy information to the UE.

In the current 5G system, UE policy information determined by a policy control function (PCF) may be provided to the UE through an access and management function (AMF), and the PCF may store the UE policy information provided to the UE in a user data repository (UDR). The PCF may perform a function of managing the UE policy information provided to the UE, stored in the UDR to be up to date such that it may be maintained identical to the UE policy information actually stored in the UE. In the 5G system that supports EPC interworking, when the network and the UE support this, the UE policy information may be delivered to the UE through an EPC entity (e.g., session management function and packet data network gateway-control (SMF+PGW-C), mobility management entity (MME)).

Meanwhile, the UE policy may not be normally transmitted to the UE depending on various events and conditions that may occur in the network. Due to this, there is a probability that UE policy information in the network and UE policy information stored in the UE may not match, which may cause a problem that the UE policy information stored in the network may no longer be trusted when the PCF manages the UE policy.

Therefore, the disclosure proposes a procedure that enables a network to detect a connection status between the network and a UE and the change therein when the network determines that there is a probability that UE policy may not be normally delivered to the UE.

Also, the disclosure provides a method and apparatus that enables a PCF managing a UE policy in a wireless communication system to provide a policy control request trigger (PCRT) to a PCF managing a session management policy and enables the PCF managing the session management policy to provide the PCRT to an SMF+PGW-C, to detect a connection status between a UE and a network and the change therein.

Also, the disclosure provides a method and apparatus that enables a PCF and/or SMF+PGW-C managing UE policy in a wireless communication system to store, retain, and manage UE policy information not normally delivered to a UE and to retransmit the UE policy to the UE depending on a connection status between the UE and a network.

FIG. 1 illustrates a network structure and interface of a wireless communication system according to an embodiment of the disclosure.

A network entity included in the network structure of 5G system of FIG. 1 may include a network function (NF) depending on system implementation.

With reference to FIG. 1, the network structure of the 5G system may include various network entities.

More specifically, the 5G system may include an authentication server function (AUSF)108, an access and mobility management function (AMF) 103, a session management function (SMF) 105, a policy control function (PCF) 106, an application function (AF) 107, a unified data management (UDM) 109, a data network (DN) 110, a network exposure function (NEF) 113, a network slicing selection function (NSSF) 114, an edge application service domain repository (EDR) 113, an edge application server (EAS) (not shown), an EAS discovery function (EASDF) (not shown), a user plane function (UPF) 104, a (radio) access network ((R)AN) 102, and a terminal, that is, a user equipment (UE) 101.

Each of the NFs of the 5G system 100 may support a function as follows.

The authentication server function (AUSF) 108 processes and stores data for authentication of the UE 101.

The access and mobility management function (AMF) 103 provides a function for access and mobility management based on UE unit and a single UE may be basically connected to a single AMF.

Specifically, the AMF 103 supports functions, such as signaling between core network (CN) nodes for mobility between 3GPP access networks, termination of a radio access network (RAN) control plane (CP) interface (i.e., N2 interface), termination (N1) of non-access stratum (NAS) signaling, NAS signaling security (NAS ciphering and integrity protection), AS security control, registration management (registration area management), connection management, idle mode UE reachability (including control and execution of paging retransmission), mobility management control (subscription and policy), intra-system mobility and inter-system mobility support, network slicing support, SMF selection, lawful intercept (LI) (for AMF event and interface to LI system), session management between the UE and the SMF, providing delivery of an SM message, transparent proxy for session management (SM) message routing, access authentication, access authorization including roaming permission check, providing delivery of an SMS message between the UE and a short message service function (SMSF), a security anchor function (SAF), and/or security context management (SCM). Some or all of functions of the AMF 103 may be supported within a single instance of a single AMF.

The data network (DN) 110 indicates, for example, an operator service, an Internet access or a 3rd party service. The DN 110 transmits a downlink protocol data unit (PDU) to the UPF 104 or receives, from the UPF 104, a PDU that is transmitted from the UE 101.

The policy control function (PCF) 106 provides a function of receiving information on packet flow from an application server and determining a policy, such as mobility management and session management. Specifically, the PCF 106 supports functions, such as supporting a unified policy framework to control the network operation, providing policy rules such that control plane function(s) (e.g., AMF, SMF, etc.) may enforce the policy rules, and implementing a front end to access relevant subscription information to determine a policy within a user data repository (UDR).

The session management function (SMF) 105 provides a session management function, and when the UE 101 has a plurality of sessions, each session may be managed by a different SMF. Specifically, the SMF 105 supports functions, such as session management (e.g., session establishment, modification, and termination including maintaining a tunnel between the UPF 104 and the (R)AN 102), UE IP address allocation and management (optionally including authentication), selection and control of a user plane (UP) function, setting of traffic steering to route traffic to an appropriate destination in the UPF 104, termination of an interface for policy control functions, enforcement of policy and quality of service (QoS) control, lawful intercept (LI) (for SM event and interface to LI system), termination of an SM portion of a NAS message, downlink data notification, access network (AN) specific SM information trigger (delivery to the (R)AN 102 through N2 by going through the AMF 103), determining a session and service continuity (SSC) mode, and roaming. Some or all of the functions of the SMF 105 may be supported within a single instance of a single SMF.

The unified data management (UDM) 109 stores user subscription data and policy data. The UDM 109 includes two parts, that is, an application front end (FE) (not shown) and a user data repository (UDR) (not shown).

The front end (FE) (not shown) includes a UDM FE that is responsible for location management, subscription management, and credential processing, and a PCF that is responsible for policy control. The UDR stores data required for functions provided from the UDM-FE and a policy profile required by the PCF. Data stored in the UDR includes user subscription data including subscription data, security credential, access and mobility related subscription data, and session related subscription data, and policy data. The UDM-FE supports functions, such as accessing subscription information stored in the UDR, authentication credential processing, user identification handling, access authentication, registration/mobility management, subscription management, and SMS management.

The user plane function (UPF) 104 delivers a downlink PDU received from the DN 110 to the UE 101 through the (R)AN 102, and delivers an uplink PDU received from the UE 101 to the DN 110 through the (R)AN 102. Specifically, the UPF 104 supports functions, such as an anchor point for intra/inter RAT mobility, an external PDU session point of interconnect to the data network, packing routing and forwarding, a user plane portion for packet inspection and policy rule enforcement, lawful intercept, traffic usage reporting, an uplink classifier to support routing of traffic flow to the data network, a branching point for supporting a multi-homed PDU session, QoS handling for user plane (e.g., packet filtering, gating, uplink/downlink rate enforcement), uplink traffic validation (SDF mapping between service data flow (SDF) and QoS flow), transport level packet marking within uplink and downlink, downlink packet buffering, and downlink data notification triggering functions. Some or all of the functions of the UPF 104 may be supported within a single instance of a single UPF.

The application function (AF) 107 interacts with a 3GPP core network to provide services (e.g., support functions, such as application influence on traffic routing, approach to network capability exposure, interaction with policy framework for policy control).

The (R)AN 102 is a general term for a new radio access network that may support both an Evolved Universal Mobile Telecommunications System (UMTS) Terrestrial Radio Access (E-UTRA), which is an evolved version of 4G radio access technology, and new radio access technology (new radio (NR)) (e.g., gNB).

The gNB supports functions for radio resource management (i.e., radio bearer control, radio admission control, connection mobility control, dynamic allocation of resources to UE in uplink/downlink (i.e., scheduling)), Internet protocol (IP) header compression, user data stream encryption and integrity protection, selection of the AMF for attachment of the UE when routing to the AMF is not determined from information provided to the UE, user plane data routing to UPF(s), control plane information routing to the AMF, connection set-up and termination, scheduling and transmission of a paging message (originated from AMF), scheduling and transmission of system broadcast information (originated from AMF or operating and maintenance (O&M)), measurement and measurement reporting setting for mobility and scheduling, transport level packet marking in uplink, session management, and support of network slicing, mapping to QoS flow management and a data radio bearer, support of the UE that is in an inactive mode, a NAS message distribution function, a NAS node selection function, radio access network sharing, dual connectivity, and tight interworking between the NR and the E-UTRA.

The UE 101 refers to a user device. The user equipment may also be referred to by terms, such as a terminal, a mobile equipment (ME), and a mobile station (MS). Also, the user equipment may be a portable device, such as a laptop computer, a mobile phone, a personal digital assistant (PDA), a smartphone, and a multimedia device, or may be a non-portable device, such as a personal computer (PC) and a vehicle-mounted device.

The network exposure function (NEF) 111 provides a method for safely exposing services and capabilities for internal exposure/re-exposure, application function, and edge computing, provided by 3GPP network functions, for example, 3rd party. The NEF 111 receives information from other NF(s) (based on exposed capability(ies) of other NF(s)). The NEF 111 may store the received information as structured data using a standardized interface as a data storage network function. The stored information may be re-exposed to other NF(s) and AF(s) by the NEF 111, and may be used for another purpose, such as analysis.

The NRF 115 supports a service discovery function. The NRF 115 receives an NF discovery request from an NF instance, and provides found information of the NF instance to the NF instance. Also, the NRF 115 maintains available NF instances and services supported thereby.

Meanwhile, although FIG. 1 illustrates a reference model for a case in which the UE 101 accesses a single DN 110 using a single PDU session for clarity of description, but the disclosure is not limited thereto.

The UE 101 may simultaneously access, for example, two (i.e., local and central) data networks using multiple PDU sessions. Here, for different PDU sessions, two SMFs may be selected. However, each SMF may have the capability of controlling both a local UPF and a central UPF within a PDU session.

Also, the UE 101 may simultaneously access, for example, two (i.e., local and central) data networks provided within a single PDU session.

The NSSF 114 may select a set of network slice instances that serve the UE 101. Also, the NSSF 114 may determine permitted network slice selection assistance information (NSSAI), and, if necessary, may perform mapping on subscribed single-network slice selection assistance information (S-NSSAI). Also, the NSSF 114 may determine configured NSSAI, and if necessary, may perform mapping on the subscribed S-NSSAI. Also, the NSSF 114 may determine an AMF set used to service the UE, or may inquire to the NRF 115 depending on configuration, and may determine a list of candidate AMFs.

The NRF 115 supports a service discovery function. The NRF 115 receives an NF discovery request from an NF instance, and provides found information of the NF instance to the NF instance. Also, the NRF 115 maintains available NF instances and services supported thereby.

In the 3GPP system, a conceptual link that connects between NFs within the 5G system is defined as a reference point. The following is an example of a reference point included in 5G system architecture represented in FIG. 1.
- N1: reference point between UE and AMF
- N2: reference point between (R)AN and AMF
- N3: reference point between (R)AN and UPF
- N4: reference point between SMF and UPF
- N5: reference point between PCF and AF
- N6: reference point between UPF and data network
- N7: reference point between SMF and PCF
- N8: reference point between UDM and AMF
- N9: reference point between two core UPFs
- N10: reference point between UDM and SMF
- N11: reference point between AMF and SMF
- N12: reference point between AMF and AUSF
- N13: reference point between UDM and authentication server function (AUSF)
- N14: reference point between two AMFs
- N15: reference point between PCF and AMF for non-roaming scenario, and reference point between PCF and AMF within visited network for roaming scenario.

In the following description, the terminal may represent the UE 101, and terms of the UE or the terminal may be interchangeably used. In this case, unless the terminal is specially additionally defined, the terminal may be understood as the UE 101.

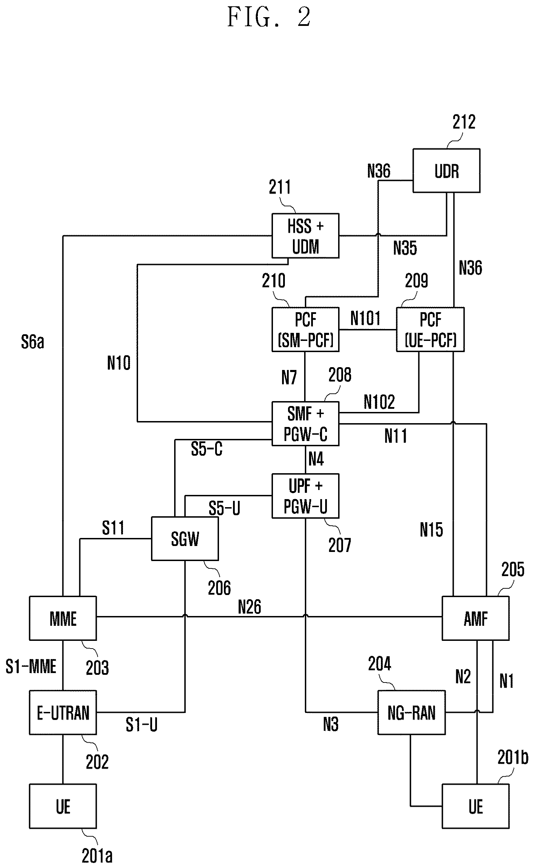

FIG. 2 illustrates a network structure and interface of a wireless communication system that supports interworking between an evolved packet system (EPS) and a 5G system (5GS) according to an embodiment of the disclosure.

Basic functions of corresponding entities of FIG. 1 among network entities of FIG. 2 may refer to the description of FIG. 1.

The 5GS may include a new radio (NR) base station (NG-radio access node (NG-RAN) or next generation node B (gNB)) 204 for radio access of a UE 201b and an access and mobility management function (AMF) 205. Also, although not illustrated in FIG. 2, the 5GS may include a session management function (SMF), a user plane function (UPF), a policy control function (PCF), a network slice selection function (NSSF), a unified data management (UDM), and a unified data repository (UDR) described with FIG. 1.

An EPS may include an E-UTRA base station (Evolved Universal Mobile Telecommunications System (UMTS) (E-UTRAN) Terrestrial Radio Access Network), or evolved node B (eNB)) 202 for radio access of a UE 201a, a mobility management entity (MME) 203 that manages mobility of the UE 201a, a serving gateway (SGW) 206 that is responsible for user plane of the UE 201a, and a packet data network gateway (PGW) (PGW includes PGW-user (U) and PGW-control (C)), a policy and charging rule function (PCRF) that manages policy information, and a home subscriber server (HSS) that manages subscription information of the UE 201a.

According to an embodiment, the AMF and the MME may be NFs that manage radio network access and mobility for the UE. The SMF, the SGW, and the PGW are NFs that manages a session for the UE, and session information may include quality of service (QoS) information, charging information, and information on packet processing. Also, the UPF and the PGW are NFs that process user plane traffic (e.g., user plane traffic) and may be controlled by the SMF and the SGW.

The PCF and the PCRF may be NFs that manage an operator policy and/or PLMN policy for providing communication services in the wireless communication system. Additionally, the PCF may be divided into a PCF (i.e., UE-PCF) that is responsible for access and mobility (AM) policy and UE policy and a PCF (i.e., SM-PCF) that is responsible for session management (SM) policy. The AM/UE policy responsible PCF (i.e., AM-PCF/UE-PCF) and the SM policy responsible PCF (i.e., SM-PCF) may be logically or physically separated NFs, or may be a logically or physically single NF. The UDM and the HSS may be NFs that store and manage UE subscription information. The UDR may be an NF or a database (DB) that stores and manages data. The UDR 212 may store UE subscription information, and may provide the UE subscription information to the UDM. Also, the UDR 212 may store operator policy information, and may provide the operator policy information to the PCF. The NSSF may be an NF that performs a function of selecting network slice instances that service the UE or determining network slice selection assistance information (NSSAI).

The instance may indicate a state in which an NF is present in the form of a software code and is allocated with physical or/and logical resources from a computing system to perform an NF function in physical computing system (e.g., specific computing system present on core network), so is capable of executing the NF function. For example, an AMF Instance, an SMF Instance, and an NSSF Instance may represent a state in which physical or/and logical resources are allocated and available for the operation of the AMF, the SMF, and the NSSF from a specific computing system present on the core network, respectively. Therefore, a case in which physical AMF, SMF, and NSSF devices are present and the AMF Instance, the SMF Instance, and the NSSF Instance that are allocated physical or/and logical resources for the operation of the AMF, the SMF, and the NSSF from the specific computing system present on the network may perform the same operations.

The UDM of the 5GS and the HSS of the EPS may be configured as a single combo node (or, referred to as combination node) (referred to as UDM+HSS) (or referred to as HSS+UDM) 211. The UDM+HSS node 211 may store UE subscriber information. The SMF of the 5GS and the PGW-C of the EPS may be configured as a single combo node (referred to as SMF+PGW-C) (or referred to as PGW-C+SMF) 208. The PCF of the 5GS and the policy control and charging rules function (PCRF) of the EPS may be configured as a single combo node (referred to as PCF+PCRF) (or referred to as PCRF+PCF). The UPF of the 5GS and the PGW-U of the EPS may be configured as a single combo node (referred to as UPF+PGW-U) (or referred to as PGW-U+ UPF) 207. The UE 201a may use an EPS network service by accessing the MME 203 of the EPS through the E-UTRA base station 202. Also, the UE 201b may use a 5GS network service by accessing the AMF 205 of the 5GS through the NR base station 204. In FIG. 2, for clarity of description, different reference numerals are used for the UE connected to the EPS and the UE connected to the 5GS, but the UEs 201a and 201b may be the same. This is to indicate that the UE may access the EPS or may access the 5GS.

Also, herein, the EPS and the 5GS may be referred to as a first network and a second network, respectively, or may be referred to as a second network and a first network, respectively.

In this way, a single NF or network entity may simultaneously support different network systems, and this NF, network node, or network entity may be referred to as the above-described combo node, combo NF, combined node, combined NF, interworking node, interworking NF, and the like. Also, a function of the NF exemplified as the combo node may be implemented through interworking between two or more network entities. In addition, for illustration and clarity of description, the NF that simultaneously supports different network systems may be displayed using symbol "+" or symbol "/". For example, when the SMF and the PGW-C are configured as a single combo node, it may be represented as PGW-C/SMF, PGW-C+SMF, SMF/PGW-C, or SMF+PGW-C.

The UE 201a, 201b may establish a session by connecting to a data network (e.g., IP network that provides Internet services) through the 5GS or the EPS. Here, the UE may identify each data network using an identifier called a data network name (DNN) or an access point name (APN). To distinguish data networks, the 5GS may use the DNN, and the EPS may use the APN. The DNN and the APN may be used to determine a user plane NF, an interface between NFs, and an operator policy when the UE connects the network system and the session. The DNN and the APN may be understood as equivalent information and may deliver the same information. The DNN may be used, for example, to select SMF and UPF(s) for a PDU session, and may be used to select interface(s) (e.g., N6 interface) between the data network and the UPF for the PDU session. Also, the DNN may be used to determine a policy of a mobile communication operator to apply to the PUD session.

In the following embodiments, the combo node, such as UDM+HSS node, PCF+PCRF node, SMF+PGW-C node, and UPF+PGW-C node, are described by omitting the name "node" for clarity of description. In the following embodiments, definition of a message defined in one embodiment may be applied as the same meaning in another embodiment using the same message.

The PCF may be divided into a session management-policy control function (SM-PCF) 210 that is responsible for a session management (SM) policy and a UE-policy control function (UE-PCF) 209 that is responsible for mobility management policy (AM policy) and/or UE policy. The SM-PCF 210 may be connected to an SMF (SMF+PGW-C in FIG. 2) 208 through an N7 interface, and may not be connected to the AMF 205. That is, the SM-PCF 210 may not support an N15 interface. The UE-PCF 209 may be connected to the AMF 205 through the N15 interface and may not be connected to the SMF (SMF+PGW-C in FIG. 2) 208. That is, the UE-PCF 209 may not support an N7 interface. The SM-PCF 210 and the UE-PCF 209 may be present at a physically and/or logically single device or single PCF, but may be classified into different PCF instances.

The UE policy provided from the PCF to the UE may include access network discovery & selection policy, UE route selection policy, vehicle-to-everything (V2X) policy, and/or ProSe policy.

Access network discovery & selection policy (ANDSP): includes policy information required when the UE selects a non-3GPP access network.

UE route selection policy (URSP): includes policy information required to route UE outgoing traffic.

V2X policy (V2XP): includes policy information that provides configuration parameters required for the UE to perform V2X communication.

ProSe policy (ProSeP): includes policy information configuration parameters required for the UE to perform ProSe direct discovery, ProSe direct communication, ProSe UE-to-network relay, and remote UE communication.

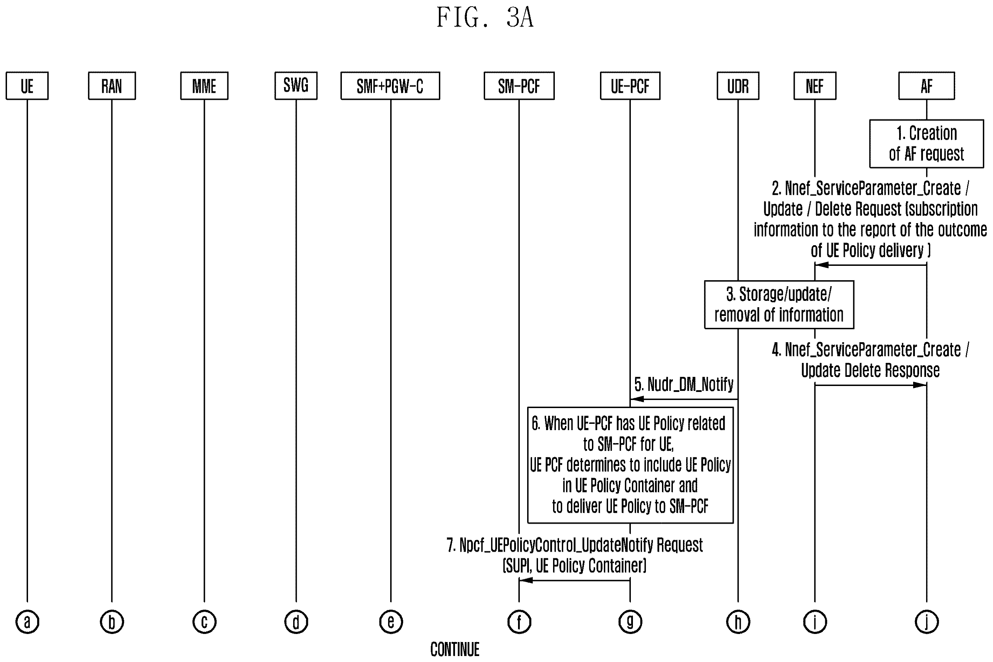

FIGS. 3a to 3d illustrate a UE policy transmission procedure between a network and a UE according to an embodiment of the disclosure.
1. An application function (AF) may create an AF request (which may include AF request message).

More specifically, the AF may create a request for providing an application or service specific parameter to a 5G system through a network exposure function (NEF). The request may include at least one information among service description, a service parameter, target UE(s) or a group of target UE(s), and subscription to events.

The subscription to events may indicate that the AF requests a subscription to the 5G system such that outcome of corresponding delivery may be notified when a UE policy delivery procedure is triggered due to a service specific parameter provisioning procedure.

2. The AF may provide the request created in the step 1 to an NEF.

For example, the AF may provide the request to the NEF using an Nnef_ServiceParameter_Create, Nnef_ServiceParameter_Update, or Nnef_ServiceParameter_Delete Request message. Here, the message may include subscription information to report the outcome of UE policy delivery described in the step 1.

3. The NEF may store or update the request of the AF received in the step 2 in a unified data repository (UDR), or may delete the request from the UDR. When performing this, a transaction reference ID may be allocated.

4. The NEF may deliver a response to the request of the AF to the AF.

More specifically, the NEF may respond to the AF using an Nnef_ServiceParameter_Create, Nnef_ServiceParameter_Update, or Nnef_ServiceParameter_Delete Response message. Here, the transaction reference ID allocated in the step 3 may be provided.

5. The UDR may notify a user equipment-policy control function (UE-PCF) of data change.

More specifically, the UE-PCF may receive an Nudr_DM_Notify notification for the data change from the UDR.

If, prior to the step 1, the UE was registered to the network and the PCF made a subscription request to the UDR to be notified of any change related to AF service parameter provisioning information for the target UE using an Nudr_DM_Subscribe message, the following steps may be performed.

The subscription request may include at least one of AF service parameter provisioning information, SUPI, a data set that is set to "Data", and a data subset that is set to "specific information". The request to report the outcome of UE policy delivery described in the steps 1 and 2 may be included in the AF service parameter provisioning information.

Although the PCF did not make the subscription request to the PDR to be notified of change related to the AF service parameter provisioning information for the target UE before the step 1, the PCF may be notified when the PCF made a subscription request for a target UE group or a target data network name (DNN).

6. The UE-PCF may initiate a UE policy delivery procedure.

When UE policy association for the UE is established with a session management-policy control function (SM-PCF), the UE-PCF may provide a UE policy container including the UE policy to the SM-PCF. Here, the UE policy container may include one or a plurality of UE policies.

An example of a case in which the UE policy association for the UE is established with the SM-PCF may include a case in which the UE is registered to the network that supports 5GS-EPS interworking through a mobility management entity (MME).

7. The UE-PCF may request a notification for UE policy control update to the SM-PCF.

More specifically, the UE-PCF may transmit an Npcf_UEPolicyControl_UpdateNotify Request message to the SM-PCF, and may provide at least one of SUPI and the UE policy container to the SM-PCF using the Npcf_UEPolicyControl_UpdateNotify Request message.

8. The SM-PCF may respond to the UE policy control update notify request from the UE-PCF.

More specifically, the SM-PCF may respond to the UE-PCF by transmitting an Npcf_UEPolicyControl_UpdateNotify Response message to the UE-PCF.

9. The SM-PCF may request a notification for SM policy control update to SMF+PGW-C.

More specifically, the SM-PCF may transmit an Npcf_SMPolicyControl_UpdateNotify Request message to the SMF+PGW-C, and may provide at least one of the SUPI and the UE policy container to the SMF+PGW-C.

10. The SMF+PGW-C may respond to the notification request for the SM policy control update.

More specifically, The SMF+PGW-C may respond to the SM-PCF using an Npcf_SMPolicyControl_UpdateNotify Response message.

11. The SMF+PGW-C may transmit an update bearer request message to a serving gateway (SGW).

More specifically, The SMF+PGW-C may provide the SGW with ePCO that includes the UE policy container using the update bearer request message.

Here, when the network and/or the UE does not support ePCO or prefers to use PCO, the PCO that includes the UE policy container may be provided. In this case, the ePCO after step 11 may be replaced with the PCO.

12. The SGW may transmit the update bearer request message to the MME.

More specifically, the SGW may deliver the ePCO that includes the UE policy container to the MME using the update bearer request message.

13. When the UE is in an MME-IDLE state, the MME may perform a network triggered service request procedure. When the UE responds to paging of the MME, a procedure after step 14 may be performed.

14. The MME may transmit a downlink NAS transport message to a RAN.

More specifically, the MME may provide the downlink NAS Transport message to the RAN, and thereby provide a session management request message to the UE. The ePCO received in the step 12 may be included in the session management request message. The ePCO may include the UE policy container described above in the steps 11 and 12.

15. The RAN may transmit a direct transfer message to the UE. More specifically, the RAN may deliver the downlink NAS transport message of the step 14 to the UE using the direct transfer message.

16. The UE may determine whether to provide the outcome of UE policy delivery to the network.

More specifically, the UE may receive a session management request message from the network, and the session management request may include ePCO, the ePCO may include UE policy container, and the UE policy container may include at least one UE policy.

When the ePCO included in the session management request received from the network includes the UE policy container, the UE may determine to respond and provide the outcome of UE policy delivery (e.g., success or failure of at least one UE policy delivery) to the EPC network.

Here, the outcome of UE policy delivery may be provided in the form of being included in the UE policy container, and the UE policy container may be included in the ePCO and delivered to the network. That is, the UE policy container delivered from the UE to the network may include ePCO, the ePCO may include the UE policy container, and the UE policy container may include the outcome of UE policy delivery.

17. The UE may transmit the direct transfer message to the RAN.

More specifically, the UE may deliver the outcome of UE policy delivery to the MME through the RAN. The UE may provide the MME with an uplink NAS transport message that includes the ePCO of the step 16 (outcome of UE policy delivery is included in UE policy container, and ePCO includes this UE policy container) using the direct transfer message.

18. The RAN may transmit the uplink NAS transport to the MME.

More specifically, the RAN may deliver the uplink NAS transport message of the step 17 to the MME. The uplink NAS transport message may include the ePCO, the ePCO may include UE policy container, and the UE policy container may include the outcome of UE policy delivery.

19. The MME may transmit an update bearer response message to the SGW.

More specifically, the MME may deliver the ePCO to the SGW using the update bearer response message. The update bearer response message may include the ePCO, the ePCO may include UE policy container, and the UE policy container may include the outcome of UE policy delivery.

20. The SGW may transmit the update bearer response message to the SMF+PGW-C.

More specifically, the SGW may deliver the ePCO to the SMF+PGW-C using the update bearer response message. The update bearer response message may include the ePCO, the ePCO may include UE policy container, and the UE policy container may include the outcome of UE policy delivery.

21. The SMF+PGW-C may request SM policy control update to the SM-PCF.

More specifically, the SMF+PGW-C may deliver the UE policy container to the SM-PCF using an Npcf_SMPolicyControl_Update Request message. The Npcf_SMPolicyControl_Update Request message may include UE policy container, and the UE policy container may include the outcome of UE policy delivery.

22. The SM-PCF may respond to the SM policy control update request from the SMF+PGW-C.

More specifically, the SM-PCF may respond to the SMF+PGW-C using the Npcf_SMPolicyControl_Update Response message.

23. The SM-PCF may request UE policy control update to the UE-PCF.

More specifically, the SM-PCF may deliver UE policy container to the UE-PCF using an Npcf_UEPolicyControl_Update Request message. The Npcf_UEPolicyControl_Update Request message may include the UE policy container, and the UE policy container may include the outcome of UE policy delivery.

24. The UE-PCF may respond to the UE policy control update request from the SM-PCF. More specifically, the UE-PCF may respond to the SM-PCF using an Npcf_UEPolicyControl_Update Response message.

25. The UE-PCF may notify the NEF of the outcome of UE policy delivery using Npcf_EventExposure_Notify.

More specifically, when the AF made the subscription request to be notified of the outcome of UE policy delivery in the step 5 and the UE policy container that includes the outcome of UE policy delivery for the target UE is received in the step 24, the UE-PCF may provide the outcome of UE policy delivery to the NEF using an Npcf_EventExposure_Notify message.

If the UE-PCF determines that the outcome of UE policy delivery is a failure, the UE-PCF may also provide cause of failure. An example of cause of failure may correspond to a case in which the UE is unreachable.

26. The NEF may provide the outcome of UE policy delivery received in the step 25 to the AF using an Nnef_ServiceParameter_Notify message.

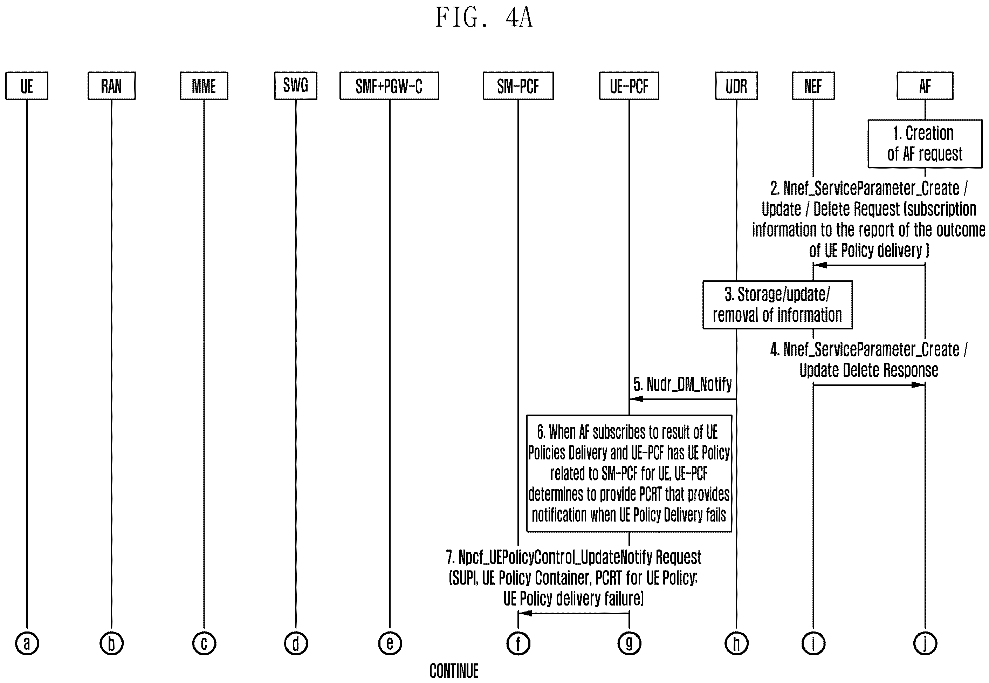

FIGS. 4a to 4d illustrate a UE policy transmission procedure between a network and a UE according to another embodiment of the disclosure.

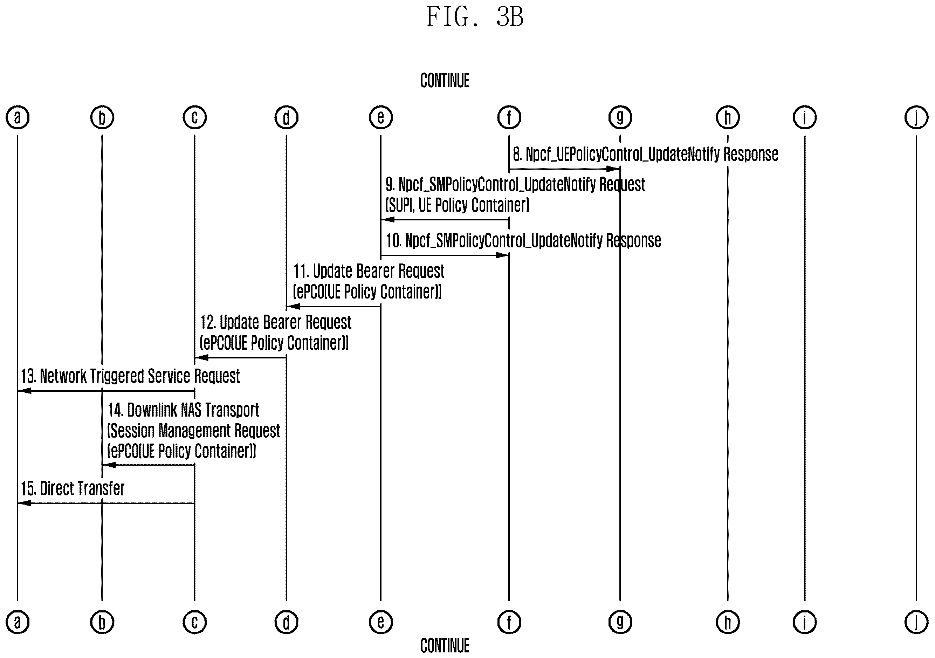

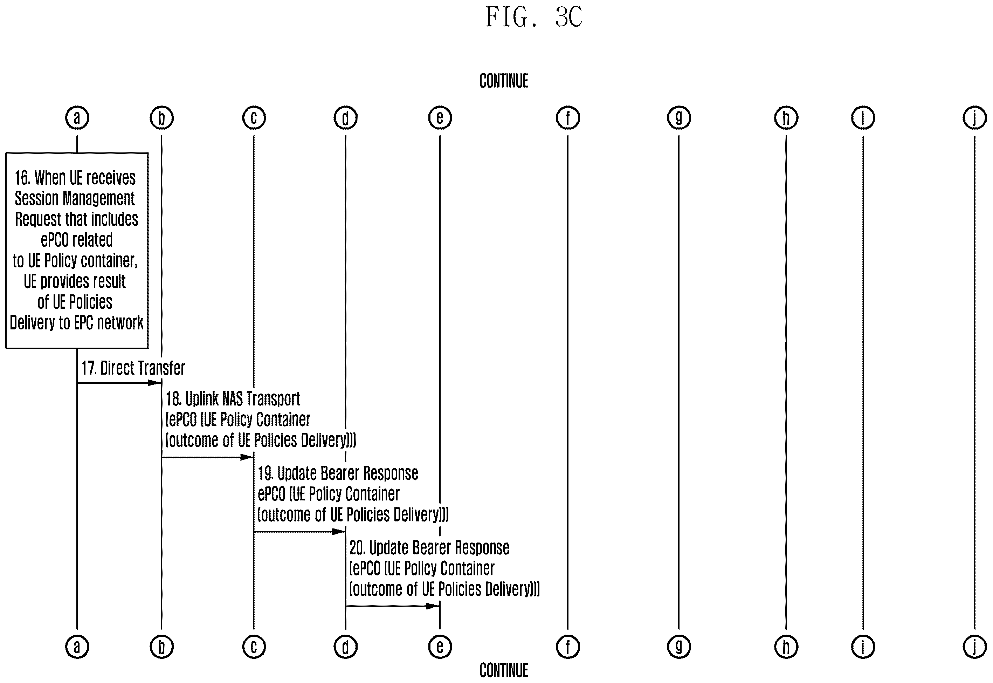

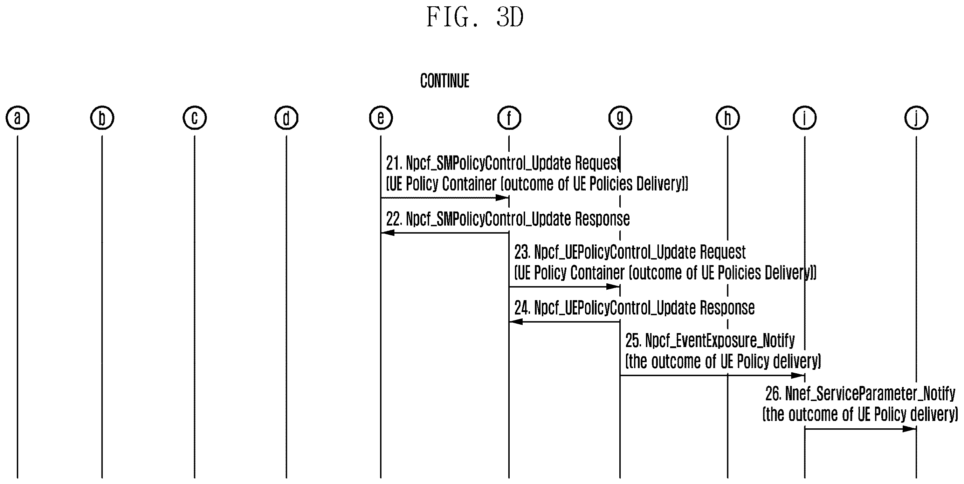

FIGS. 4a to 4d correspond to a procedure in which a method of detecting a case in which the UE policy delivery procedure fails due to a connection status between the UE and the EPC network is added to the procedure described above in FIGS. 3a to 3d. Therefore, the same content as the content described in FIG. 3 may be omitted.
1. An application function (AF) may create an AF request (which may include AF request message).

More specifically, the AF may create a request for providing an application or service specific parameter to a 5G system through a network exposure function (NEF). The request may include at least one information among service description, a service parameter, target UE(s) or a group of target UE(s), and subscription to events. The subscription to events may indicate that the AF requests a subscription to the 5G system such that outcome of corresponding delivery may be notified when a UE policy delivery procedure is triggered due to a service specific parameter provisioning procedure. (Same as step 1 of FIG. 3)

2. The AF may provide the request created in the step 1 to an NEF.

For example, the AF may provide the request to the NEF using an Nnef_ServiceParameter_Create, Nnef_ServiceParameter_Update, or Nnef_ServiceParameter_Delete Request message. Here, the message may include subscription information to report the outcome of UE policy delivery described in the step 1. (Same as step 2 of FIG. 3)

3. The NEF may store or update the request of the AF received in the step 2 in a unified data repository (UDR), or may delete the request from the UDR. When performing this, a transaction reference ID may be allocated. (Same as step 3 of FIG. 3)

4. The NEF may deliver a response to the request of the AF to the AF.

More specifically, the NEF may respond to the AF using an Nnef_ServiceParameter_Create, Nnef_ServiceParameter_Update, or Nnef_ServiceParameter_Delete Response message. Here, the transaction reference ID allocated in the step 3 may be provided. (Same as step 4 of FIG. 3)

5. The UDR may notify a user equipment-policy control function (UE-PCF) of data change. More specifically, the UE-PCF may receive an Nudr_DM_Notify notification for the data change from the UDR.

If, prior to the step 1, the UE was registered to the network and the PCF made a subscription request to the UDR to be notified of any change related to AF service parameter provisioning information for the target UE using an Nudr_DM_Subscribe message, the following steps may be performed.

The subscription request may include at least one of AF service parameter provisioning information, SUPI, a data set that is set to "Data", and a data subset that is set to "specific information". The request to report the outcome of UE policy delivery described in the steps 1 and 2 may be included in the AF service parameter provisioning information.

Although the PCF did not make the subscription request to the PDR to be notified of change related to the AF service parameter provisioning information for the target UE before the step 1, the PCF may be notified when the PCF made a subscription request for a target UE group or a target data network name (DNN). (Same as step 5 of FIG. 3)

6. The UE-PCF may initiate a UE policy delivery procedure.

More specifically, when the AF made the subscription request to be notified of the outcome of UE policy delivery in the step 5, the UE-PCF may determine to provide a policy control report trigger (PCRT) that provides a notification when UE policy delivery fails in the network.

Also, when it is determined that it is necessary to detect whether the UE policy delivery failed in the network based on information held by the UE-PCF and/or information received from another NF, the UE-PCF may determine to provide a PCRT that provides a notification when UE policy delivery fails in the network.

When UE policy association for the UE is established with the SM-PCF, the UE-PCF may provide the SM-PCF with the PCRT that provides a notification when UE policy delivery fails in the network.

7. The UE-PCF may request a notification for UE policy control update to the SM-PCF.

More specifically, the UE-PCF may transmit an Npcf_UEPolicyControl_UpdateNotify Request message to the SM-PCF, and may provide at least one of SUPI, UE policy container, and PCRT to the SM-PCF using the Npcf_UEPolicyControl_UpdateNotify Request message. The PCRT refers to a PCRT for UE policy and may indicate a PCRT that provides a notification when UE policy delivery fails in the network, described in the step 6.

8. The SM-PCF may respond to the UE policy control update notify request from the UE-PCF. More specifically, the SM-PCF may respond to the UE-PCF by transmitting an Npcf_UEPolicyControl_UpdateNotify Response message to the UE-PCF. (Same as step 8 of FIG. 3)

9. The SM-PCF may request a notification for SM policy control update to SMF+PGW-C. More specifically, the SM-PCF may provide at least one of SUPI, UE policy container, and PCRT to the SMF+PGW-C using an Npcf_SMPolicyControl_UpdateNotify Request message. The PCRT refers to a PCRT for SM policy and may indicate a PCRT that provides a notification when UE policy delivery fails in the network.

When the SM-PCF received, from the UE-PCF, a PCRT that provides a notification when UE policy delivery fails in the network in the step 7 or determined that it is necessary to detect whether UE policy delivery failed in the network based on information held by the SM-PCF and/or information received from another NF, the SM-PCF may provide the PCRT that provides a notification when UE policy delivery fails in the network as the PCRT for SM policy.

10. The SMF+PGW-C may respond to the notification request for SM policy control update. Specifically, the SMF+PGW-C may respond to the SM-PCF using the Npcf_SMPolicyControl_UpdateNotify Response message. (Same as step 10 of FIG. 3)

11. The SMF+PGW-C may transmit an update bearer request message to the serving gateway (SGW). More specifically, the SMF+PGW-C may provide the SGW with ePCO that includes the UE policy container using the update bearer request message.

Here, when the network and/or the UE does not support ePCO or prefers to use PCO, the PCO that includes the UE policy container may be provided. In this case, the ePCO after step 11 may be replaced with the PCO. (Same as step 11 of FIG. 3)

12. The SGW may transmit the update bearer request message to an MME.

More specifically, the SGW may deliver the ePCO that includes the UE policy container to the MME using the update bearer request message. (Same as step 12 of FIG. 3)

13. When the UE is in an MME-IDLE state, the MME may perform a network triggered service request procedure. When the UE does not respond to paging of the MME, a procedure after step 14 may be performed.

14. When the UE is not connectable to the network as described in the step 13, the MME may determine that the UE is unreachable.

15. The MME may transmit an update bearer response message to the SGW.

More specifically, when the MME determines that the UE is unreachable in the step 14, the MME may provide a rejection cause in responding to the update bearer request of the SGW in the step 12.

For example, the MME may use the update bearer response message to provide that the UE enters into a power saving mode and is temporarily not reachable, as the rejection cause, such as 'UE is temporarily not reachable due to power saving'. However, the above-described rejection cause is only an embodiment and is not limited to the example.

16. The SGW may transmit the update bearer response message to the SMF+PGW-C.

More specifically, the SGW may deliver the rejection cause received in the step 15 to the SMF+PGW-C. For example, the SGW may use the update bearer response message to provide the rejection cause indicating that the UE enters into a power saving mode and is temporarily not reachable.

17. The SMF+PGW-C may determine whether the PCRT condition is satisfied.

More specifically, when the SMF+PGW-C discovers in the step 11 that ePCO containing UE policy container that the SMF+PGW-C request to be delivered to the UE has not been delivered to the UE, the SMF+PGW-C may determine that the condition of PCRT that provides a notification when UE policy delivery fails in the network as PCRT for SM policy is satisfied. Here, the cause of not being delivered to the UE may include 'UE is temporarily not reachable', but is not limited thereto.

A method of determining that the SMF+PGW-C is under condition that the UE policy was not delivered to the UE or may not be delivered thereto may include other methods other than a method of receiving that UE is not reachable from the MME and/or the SGW through the steps 15 and 16.

For example, a case in which the SMF+PGW-C is under condition that the UE policy was not delivered to the UE or may not be delivered thereto may include at least one of a case in which it is possible to determine that a 5GS NAS message transmission and reception function (e.g., N1 mode) of the UE is disabled, a case in which the MME does not support ePCO transmission and reception, a case in which the SMF+PGW-C does not support ePCO transmission and reception, a case in which the SMF+PGW-C does not support a function of including the UE policy container in ePCO, and a case in which PDN connection required for the current UE may not be handed over or moved to the 5GS. In the case of corresponding to one of the above-described cases, the SMF+PGW-C may determine that the condition of PCRT that provides a notification when UE policy delivery fails in the network as PCRT for the SM policy received from the SM-PCF in the step 9.

This decision may be performed in step 9, and when it is performed in step 9, steps 11 to 16 may be omitted.

18. The SMF+PGW-C may retry a procedure of delivering the ePCO to the UE.

More specifically, when the SMF+PGW-C is notified by the MME through the SGW after the step 17 that the UE is connected to the network and signaling between the UE and the MME is possible (UE is available for end to end signalling), the SMF+PGW-C may retry the procedure of delivering, to the UE, the ePCO that includes the UE policy container (steps 11 to 15 of FIG. 3).

To this end, the SMF+PGW-C needs to store, retain, and/or manage the UE policy container received in the step 9. A notification that signaling between the UE and MME is possible (UE is available for end to end signalling) may be received through a mobility bearer request message.

19. The SMF+PGW-C may request SM policy control update to the SM-PCF.

More specifically, the SMF+PGW-C may report to the SM-PCF that UE policy delivery failed in the network, using an Npcf_SMPolicyControl_Update Request message.

For example, according to the rejection cause described in the step 17, that UE policy delivery failed in the network due to the UE being temporarily unreachable may be reported. The failure cause may be cited in the report itself or may be additionally provided as separate cause information.

20. The SM-PCF may determine whether the condition of PCRT is satisfied.

More specifically, when the SM-PCF receives report that UE policy delivery failed in the network due to the UE being temporarily unreachable, as described above in the step 19, the condition of PCRT that provides a notification when the UE policy delivery fails in the network is satisfied as the PCRT for UE policy received from the UE-PCF in the step 7.

21. The SM-PCF may respond to the SM policy control update request from the SMF+PGW-C. More specifically, the SM-PCF may respond to the SMF+PGW-C using the Npcf_SMPolicyControl_Update Response message. (Same as step 22 of FIG. 3)

22. The SM-PCF may request UE policy control update to the UE-PCF.

More specifically, the SM-PCF may report to the UE-PCF that UE policy delivery failed in the network using an Npcf_UEPolicyControl_Update Request message. For example, according to the rejection cause described in the step 20, the SM-PCF may report that the UE policy delivery failed in the network due to the UE being temporarily unreachable. The failure cause may be cited in the report itself or may be additionally provided as separate cause information.

23. The UE-PCF may respond to the UE policy control update request from the SM-PCF. More specifically, the UE-PCF may respond to the SM-PCF using an Npcf_UEPolicyControl_Update Response message. (Same as step 24 of FIG. 3)

24. The UE-PCF may notify the NEF of the outcome of UE policy delivery using Npcf_EventExposure_Notify.

More specifically, when the AF made the subscription request to be notified of the outcome of UE policy delivery in the step 5 and the UE policy container that includes the outcome of UE policy delivery for the target UE is received in the step 24, the UE-PCF may provide the outcome of UE policy delivery to the NEF using an Npcf_EventExposure_Notify message.

If the UE-PCF determines that the outcome of UE policy delivery is a failure, the UE-PCF may also provide cause of failure. An example of cause of failure may correspond to a case in which the UE is unreachable. (Same as step 25 of FIG. 3)

25. The NEF may provide the outcome of UE policy delivery received in the step 25 to the AF using an Nnef_ServiceParameter_Notify message. (Same as step 26 of FIG. 3)

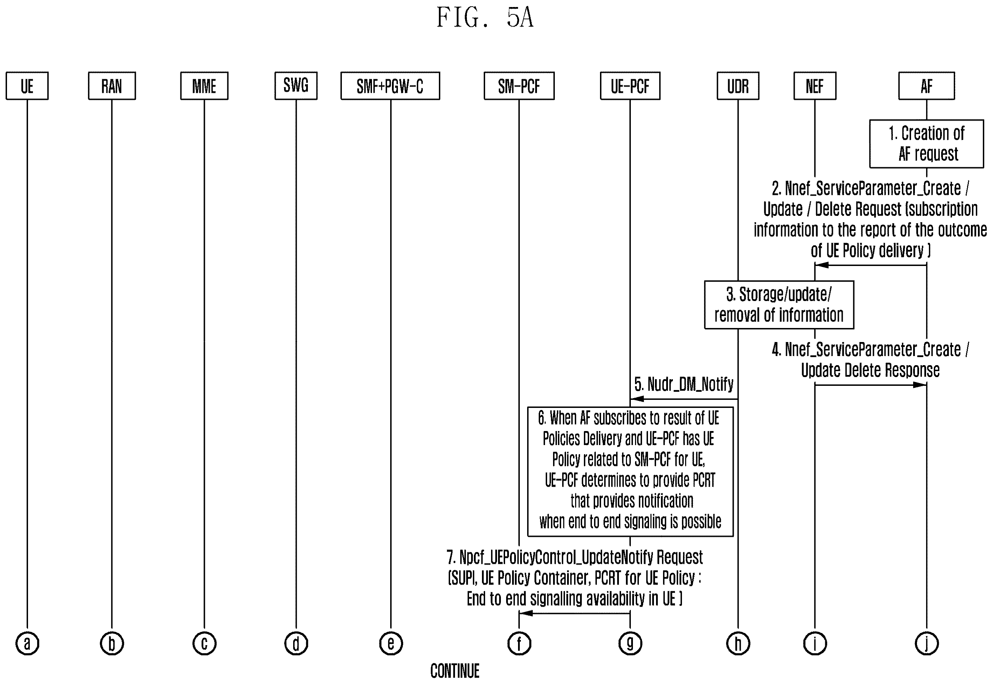

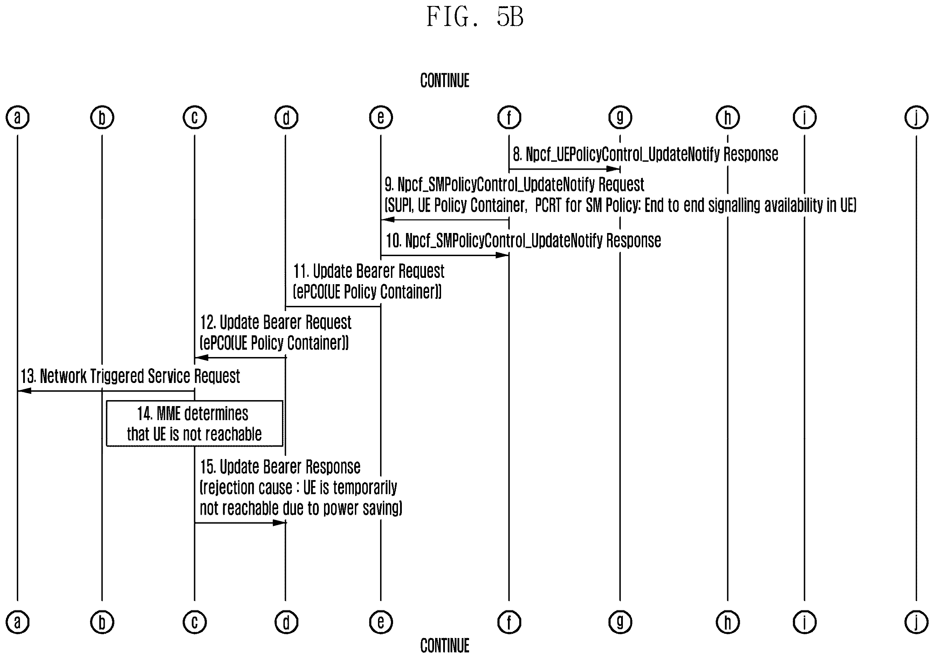

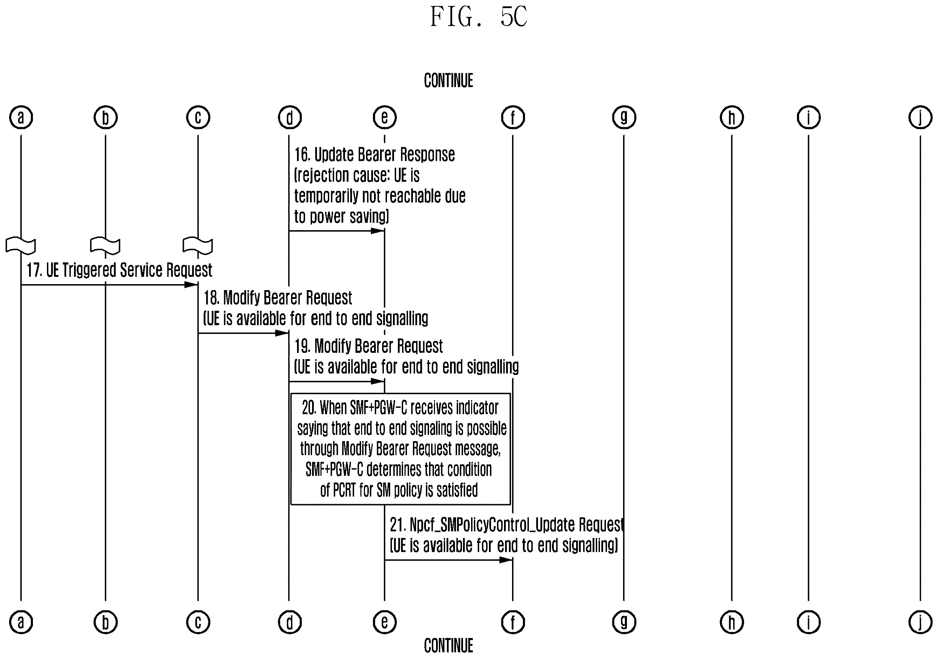

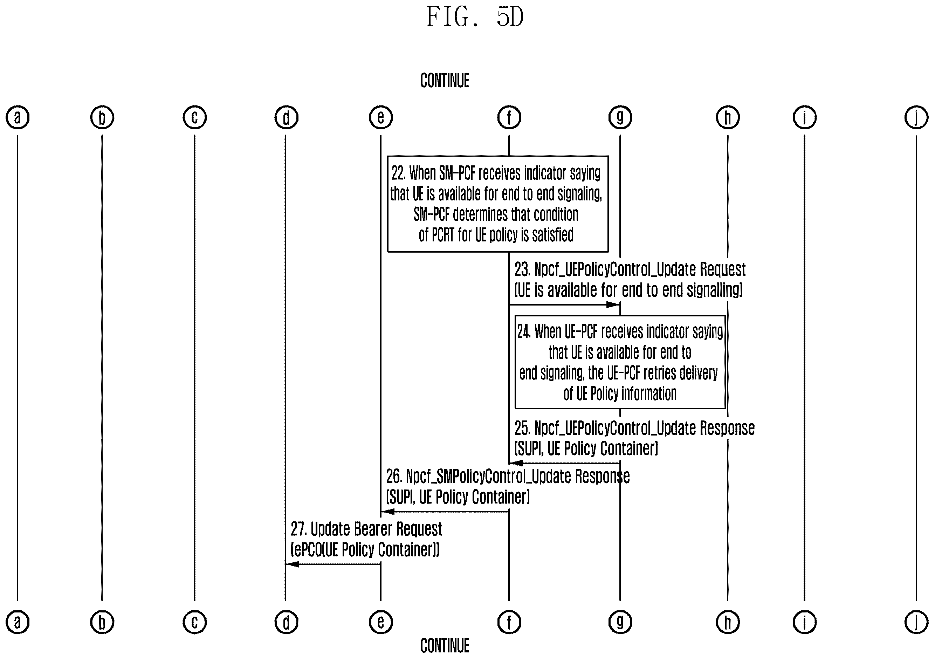

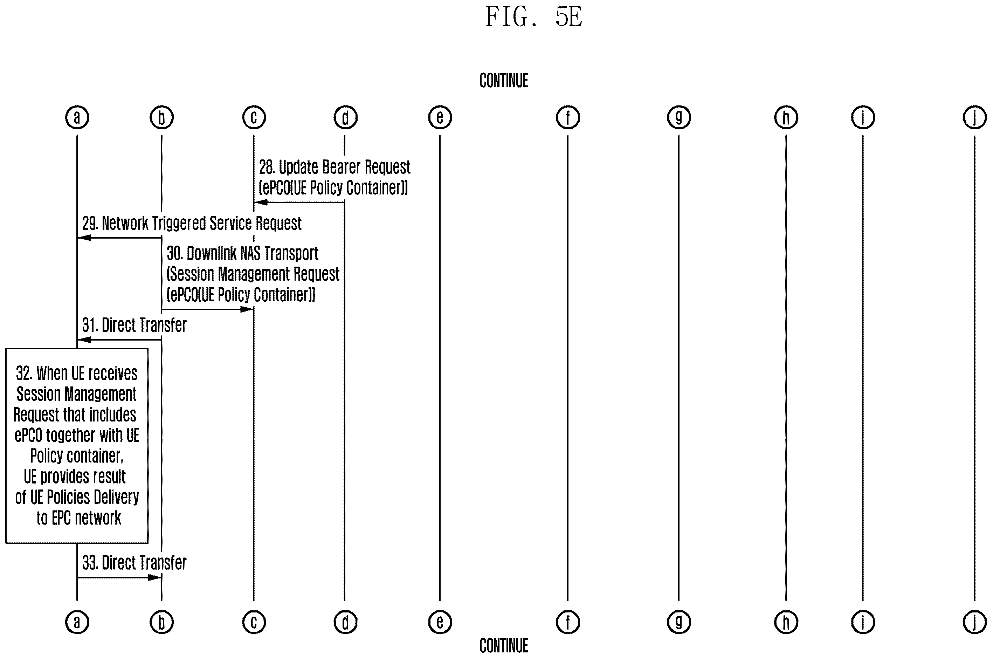

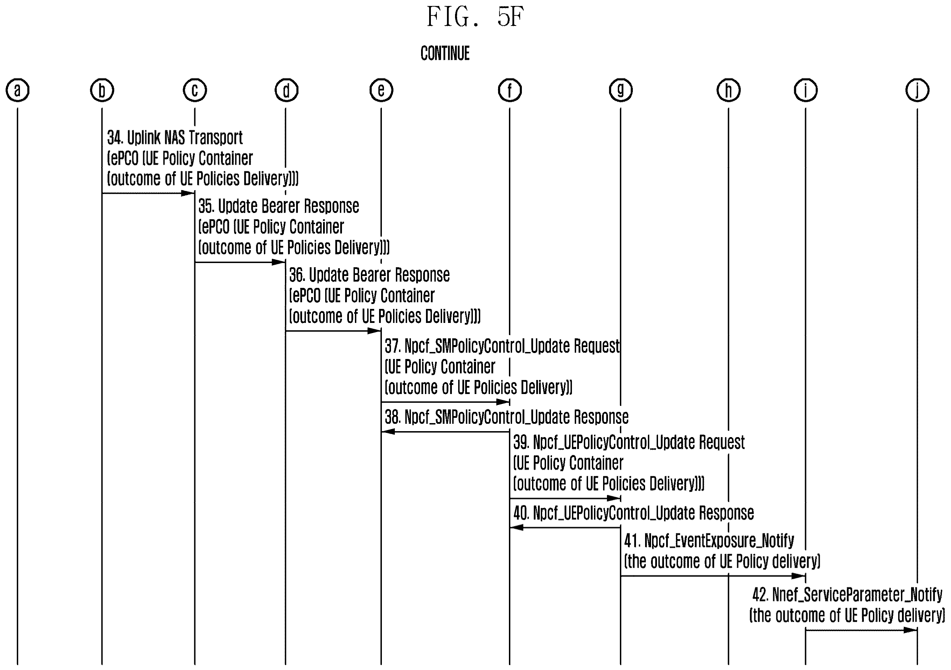

FIGS. 5a to 5f illustrate a UE policy transmission procedure between a network and a UE according to another embodiment of the disclosure.

FIGS. 5a to 5f correspond to a procedure in which a method of detecting a resumed status between the UE and the EPC network is added to the UE policy delivery procedure described in FIGS. 4a to 4d. Therefore, the same content as the content described in FIGS. 3a to 3d and FIGS. 4a to 4d may be omitted.
1. An application function (AF) may create an AF request (which may include AF request message).

More specifically, the AF may create a request for providing an application or service specific parameter to a 5G system through a network exposure function (NEF). The request may include at least one information among service description, a service parameter, target UE(s) or a group of target UE(s), and subscription to events. The subscription to events may indicate that the AF requests a subscription to the 5G system such that outcome of corresponding delivery may be notified when a UE policy delivery procedure is triggered due to a service specific parameter provisioning procedure. (Same as step 1 of FIG. 3)

2. The AF may provide the request created in the step 1 to an NEF.

For example, the AF may provide the request to the NEF using an Nnef_ServiceParameter_Create, Nnef_ServiceParameter_Update, or Nnef_ServiceParameter_Delete Request message. Here, the message may include subscription information to report the outcome of UE policy delivery described in the step 1. (Same as step 2 of FIG. 3)

3. The NEF may store or update the request of the AF received in the step 2 in a unified data repository (UDR), or may delete the request from the UDR. When performing this, a transaction reference ID may be allocated. (Same as step 3 of FIG. 3)

4. The NEF may deliver a response to the request of the AF to the AF.

More specifically, the NEF may respond to the AF using an Nnef_ServiceParameter_Create, Nnef_ServiceParameter_Update, or Nnef_ServiceParameter_Delete Response message. Here, the transaction reference ID allocated in the step 3 may be provided. (Same as step 4 of FIG. 3)

5. The UDR may notify a user equipment-policy control function (UE-PCF) of data change.

More specifically, the UE-PCF may receive an Nudr_DM_Notify notification for the data change from the UDR.

If, prior to the step 1, the UE was registered to the network and the PCF made a subscription request to the UDR to be notified of any change related to AF service parameter provisioning information for the target UE using an Nudr_DM_Subscribe message, the following steps may be performed.

The subscription request may include at least one of AF service parameter provisioning information, SUPI, a data set that is set to "ication Data", and a data subset that is set to "specific information". The request to report the outcome of UE policy delivery described in the steps 1 and 2 may be included in the AF service parameter provisioning information.

Although the PCF did not make the subscription request to the PDR to be notified of change related to the AF service parameter provisioning information for the target UE before the step 1, the PCF may be notified when the PCF made a subscription request for a target UE group or a target data network name (DNN). (Same as step 5 of FIG. 3)

6. The UE-PCF may initiate a UE policy delivery procedure.

More specifically, when the AF made the subscription request to be notified of the outcome of UE policy delivery in the step 5, the UE-PCF may determine to provide a policy control report trigger (PCRT) that provides a notification when connection between the UE and the EPC network is resumed and the UE policy delivery is possible.

Also, when the UE-PCF determines that it is necessary to detect whether connection between the UE and the EPC network is resumed based on information held by the UE-PCF and/or information received from another NF, the UE-PCF may determine to provide the PCRT that provides a notification when connection between the UE and the EPC network is resumed and the UE policy delivery is possible.

When UE policy association for the UE is established with the SM-PCF, the UE-PCF may provide the SM-PCF with the PCRT that provides a notification when connection between the UE and the EPC network is resumed and the UE policy delivery is possible. When the UE-PCF is notified by the SM-PCF and/or SMF+PGW-C after step 6 that signaling between the UE and the MME is possible (UE is available for end to end signalling), the UE-PCF may retry the procedure of delivering, to the UE, the UE policy container that includes the UE policy (steps 7 to 15 of FIG. 3). To this end, the UE-PCF may store, retain, and/or manage the UE policy and/or the UE policy container that includes the UE policy.

7. The UE-PCF may request a notification for UE policy control update to the SM-PCF.

More specifically, the UE-PCF may transmit an Npcf_UEPolicyControl_UpdateNotify Request message to the SM-PCF, and may provide at least one of SUPI, UE policy container, and PCRT to the SM-PCF. The PCRT refers to PCRT for UE policy and may indicate PCRT that provides a notification when connection between the UE and the EPC network is resumed and the UE policy delivery is possible, described in the step 6.

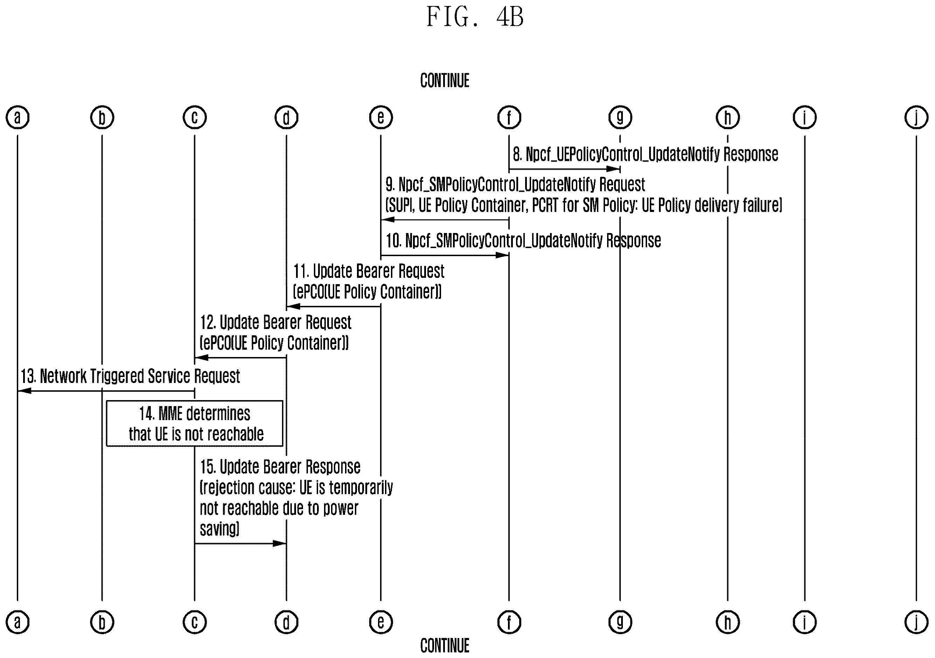

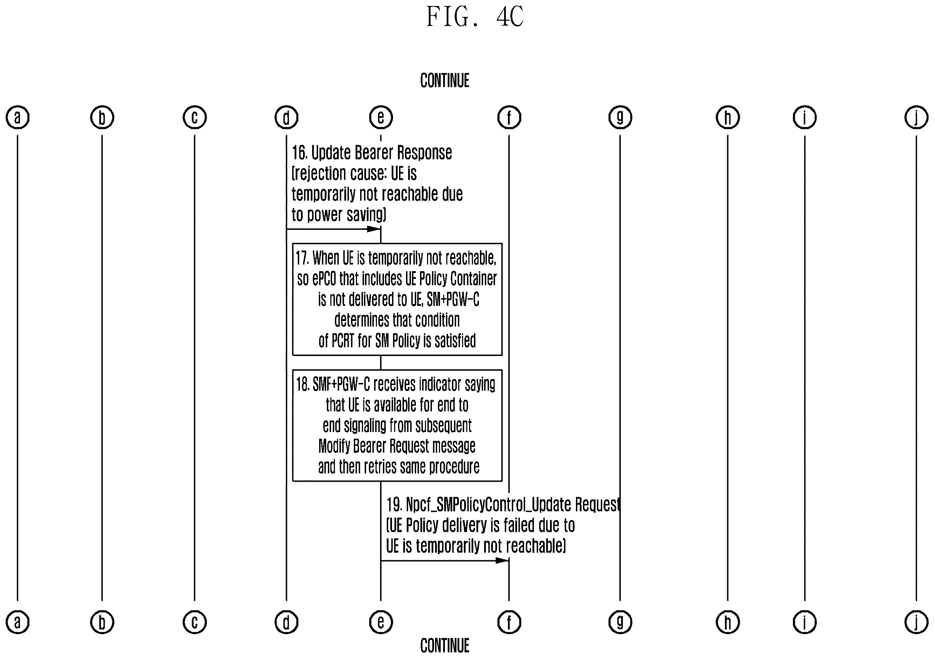

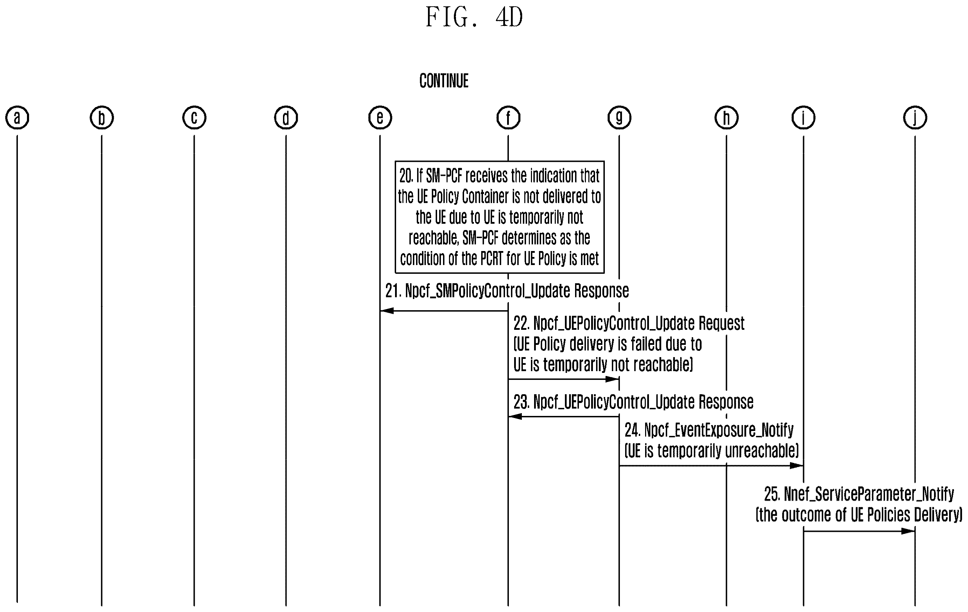

8. The SM-PCF may respond to the UE policy control update notify request from the UE-PCF. More specifically, the SM-PCF may respond to the UE-PCF by transmitting an Npcf_UEPolicyControl_UpdateNotify Response message to the UE-PCF. (Same as step 8 of FIG. 4)

9. The SM-PCF may request a notification for SM policy control update to SMF+PGW-C.

More specifically, the SM-PCF may provide at least one of SUPI, UE policy container, and PCRT to the SMF+PGW-C using the Npcf_SMPolicyControl_UpdateNotify Request message. The PCRT refers to PCRT for SM policy and may indicate PCRT that provides a notification when connection between the UE and the EPC network is resumed and the UE policy delivery is possible.

When the SM-PCF received, from the UE-PCF, the PCRT that provides a notification when connection between the UE and the EPC network is resumed and the UE policy delivery is possible as PCRT for UE policy in the step 7, or when the SM-PCF determines that it is necessary to determine whether the connection between the UE and the EPC network is resumed based on information held by the SM-PCF and/or information received from another NF, the SM-PCF may provide PCRT that provides a notification when connection between the UE and the EPC network is resumed and the UE policy delivery is possible as the PCRT for the SM policy.

10. The SMF+PGW-C may respond to the notification request for SM policy control update.

More specifically, the SMF+PGW-C may respond to the SM-PCF using the Npcf_SMPolicyControl_UpdateNotify Response message. (Same as step 10 of FIG. 4)

11. The SMF+PGW-C may transmit an update bearer request message to the SGW. More specifically, the SMF+PGW-C may provide the SGW with ePCO that includes the UE policy container using the update bearer request message.

Here, when the network and/or the UE does not support ePCO or prefers to use PCO, the PCO that includes the UE policy container may be provided. In this case, the ePCO after step 11 may be replaced with the PCO. (Same as step 11 of FIG. 4)

12. The SGW may transmit the update bearer request message to an MME.

More specifically, the SGW may deliver the ePCO that includes the UE policy container to the MME using the update bearer request message. (Same as step 12 of FIG. 4)

13. When the UE is in an MME-IDLE state, the MME may perform a network triggered service request procedure. When the UE does not respond to paging of the MME, a procedure after step 14 may be performed. (Same as step 13 of FIG. 4)

14. When the UE is not connectable to the network as described in the step 13, the MME may determine that the UE is unreachable. (Same as step 14 of FIG. 4)

15. The MME may transmit an update bearer response message to the SGW.

More specifically, when the MME determines that the UE is unreachable in the step 14, the MME may provide a rejection cause in responding to the update bearer request of the SGW in the step 12.

For example, the MME may use the update bearer response message to provide that the UE enters into a power saving mode and is temporarily not reachable, as the rejection cause, such as 'UE is temporarily not reachable due to power saving'. However, the above-described rejection cause is only an embodiment and is not limited to the example. (Same as step 15 of FIG. 4)

16. The SGW may transmit the update bearer response message to the SMF+PGW-C.

More specifically, the SGW may deliver the rejection cause received in the step 15 to the SMF+PGW-C. For example, the SGW may use the update bearer response message to provide the rejection cause indicating that the UE enters into a power saving mode and is temporarily not reachable. (Same as step 16 of FIG. 4)

17. When the UE is ready to connect to the network, the UE may perform a UE triggered service request procedure.

18. The MME may transmit a modify bearer request message to the SGW.

More specifically, when the UE makes a service request in the step 17, the MME may reset the result of determining that the UE is not connectable to the network in the step 14 and may transmit, to the SGW, that signaling between the UE and the MME is possible (UE is available for end to end signalling) using a mobility bearer request message.

19. The SGW may transmit the modify bearer request message to the SMF+PGW-C.

More specifically, the SGW may use the mobility bearer request message to inform the SMF+PGW-C that signaling between the UE and the MME is possible in the step 18 (UE is available for end to end signalling).

20. The SMF+PGW-C may determine whether the condition of PCRT is satisfied.

More specifically, when the SMF+PGW-C is notified that signaling between the UE and the MME is possible in the step 19 (UE is available for end to end signalling), it may be determined that the condition of PCRT that provides a notification when connection between the UE and the EPC network is resumed and the UE policy delivery is possible as the PCRT for the SM policy received from the SM-PCF in the step 9 is satisfied.

21. The SMF+PGW-C may request SM policy control update.

More specifically, the SMF+PGW-C may report to the SM-PCF that signaling between the UE and the MME is possible (UE is available for end to end signalling) using an Npcf_SMPolicyControl_Update Request message.

22. The SM-PCF may determine whether the PCRT condition is satisfied.

More specifically, when the SM-PCF is notified in the step 21 that signaling between the UE and the MME is possible (UE is available for end to end signalling), it may be determined that the condition of PCRT that provides a notification when connection between the UE and the EPC network is resumed and the UE policy delivery is possible is satisfied as the PCRT for the SM policy received from the SM-PCF in the step. 7.

23. The SM-PCF may request UE policy control update to the UE-PCF.

More specifically, the SM-PCF may report to the UP-PCF that signaling between the UE and the MME is possible (UE is available for end to end signalling) using an Npcf_UEPolicyControl_Update Request message

24. The UE-PCF may determine to retry the procedure of delivering, to the UE, the UE policy container that includes the UE policy.

More specifically, as described in the step 6, when the UE-PCF is notified by the SM-PCF in the step 23 that signaling between the UE and the MME is possible (UE is available for end to end signalling), the UE-PCF may determine to retry the procedure of delivering, to the UE, the UE policy container that includes the UE policy.

For example, when the UE-PCF has been notified through the SM-PCF that the UE policy delivery failed in the network as described in FIG. 4, signaling between the UE and the MME has become possible, so the UE-PCF may retry the procedure of delivering, to the UE, the UE policy container that includes the UE policy.

25. The UE-PCF may respond to the UE policy control update request from the SM-PCF.

More specifically, the UE-PCF may provide the SM-PCF with the UE policy container that includes the UE policy using an Npcf_UEPolicyControl_Update Response message.

26. The SM-PCF may respond to the SM policy control update request from the SMF+PGW-C. More specifically, the SM-PCF may provide the SMF+PGW-C with the UE policy container that includes the UE policy using an Npcf_SMPolicyControl_Update Response message.

27. The SMF+PGW-C may transmit an update bearer request message to the SGW. More specifically, the SMF+PGW-C may provide the SGW with ePCO that includes the UE policy container using the update bearer request message.

Here, when the network and/or the UE does not support ePCO or prefers to use PCO, the PCO that includes the UE policy container may be provided. In this case, the ePCO after step 11 may be replaced with the PCO. (Same as the step 11)

28. The SGW may transmit the update bearer request message to the MME.

More specifically, the SGW may deliver the ePCO that includes the UE policy container to the MME using the update bearer request message. (Same as the step 12)

29. When the UE is in an MME-IDLE state, the MME may perform a network triggered service request procedure. (Same as the step 13)

30. The MME may transmit a downlink NAS transport message to a RAN.

More specifically, the MME may provide the downlink NAS transport message to the RAN, thereby providing a session management request message to the UE.

The session management request message may include the ePCO received in the step 12. The ePCO may include the UE policy container as described above in the steps 11 and 12. (Same as step 14 of FIG. 3)

31. The RAN may transmit a direct transfer message to the UE. More specifically, the RAN may deliver the downlink NAS transport message of the step 14 to the UE using the direct transfer message. (Same as step 15 of FIG. 3)

32. The UE may determine whether to provide the outcome of UE policy delivery to the network.

More specifically, the UE may receive a session management request message from the network, and the session management request may include ePCO, the ePCO may include UE policy container, and the UE policy container may include at least one UE policy.

When the ePCO included in the session management request received from the network includes the UE policy container, the UE may determine to respond and provide the outcome of UE policy delivery (e.g., success or failure of at least one UE policy delivery) to the EPC network.

Here, the outcome of UE policy delivery may be provided in the form of being included in the UE policy container, and the UE policy container may be included in the ePCO and delivered to the network. That is, the UE policy container delivered from the UE to the network may include ePCO, the ePCO may include the UE policy container, and the UE policy container may include the outcome of UE policy delivery. (Same as step 16 of FIG. 3)

33. The UE may transmit the direct transfer message to the RAN. More specifically, the UE may deliver the outcome of UE policy delivery to the MME through the RAN. The UE may provide the MME with an uplink NAS transport message that includes the ePCO of the step 16 (outcome of UE policy delivery is included in UE policy container, and ePCO includes this UE policy container) using the direct transfer message. (Same as step 17 of FIG. 3)

34. The RAN may transmit the uplink NAS transport to the MME.

More specifically, the RAN may deliver the uplink NAS transport message of the step 17 to the MME. The uplink NAS transport message may include the ePCO, the ePCO may include UE policy container, and the UE policy container may include the outcome of UE policy delivery. (Same as step 18 of FIG. 3)

35. The MME may transmit an update bearer response message to the SGW.

More specifically, the MME may deliver the ePCO to the SGW using the update bearer response message. The update bearer response message may include the ePCO, the ePCO may include UE policy container, and the UE policy container may include the outcome of UE policy delivery. (Same as step 19 of FIG. 3)

36. The SGW may transmit the update bearer response message to the SMF+PGW-C.

More specifically, the SGW may deliver the ePCO to the SMF+PGW-C using the update bearer response message. The update bearer response message may include the ePCO, the ePCO may include UE policy container, and the UE policy container may include the outcome of UE policy delivery. (Same as step 20 of FIG. 3)

37. the SMF+PGW-C may request SM policy control update to the SM-PCF.

More specifically, the SMF+PGW-C may deliver the UE policy container to the SM-PCF using an Npcf_SMPolicyControl_Update Request message. The Npcf_SMPolicyControl_Update Request message may include UE policy container, and the UE policy container may include the outcome of UE policy delivery. (Same as step 21 of FIG. 3)

38. The SM-PCF may respond to the SM policy control update request from the SMF+PGW-C.

More specifically, the SM-PCF may respond to the SMF+PGW-C using the Npcf_SMPolicyControl_Update Response message. (Same as step 22 of FIG. 3)

39. The SM-PCF may request UE policy control update to the UE-PCF.

More specifically, the SM-PCF may deliver UE policy container to the UE-PCF using an Npcf_UEPolicyControl_Update Request message. The Npcf_UEPolicyControl_Update Request message may include the UE policy container, and the UE policy container may include the outcome of UE policy delivery. (Same as step 23 of FIG. 3)

40. The UE-PCF may respond to the UE policy control update request from the SM-PCF. More specifically, the UE-PCF may respond to the SM-PCF using an Npcf_UEPolicyControl_Update Response message. (Same as step 24 of FIG. 3)

41. The UE-PCF may notify the NEF of the outcome of UE policy delivery using Npcf_EventExposure_Notify.

More specifically, when the AF made the subscription request to be notified of the outcome of UE policy delivery in the step 5 and the UE policy container that includes the outcome of UE policy delivery for the target UE is received in the step 24, the UE-PCF may provide the outcome of UE policy delivery to the NEF using an Npcf_EventExposure_Notify message.

If the UE-PCF determines that the outcome of UE policy delivery is a failure, the UE-PCF may also provide cause of failure. An example of cause of failure may correspond to a case in which the UE is unreachable. (Same as step 25 of FIG. 3)

42. The NEF may provide the outcome of UE policy delivery received in the step 25 to the AF using an Nnef_ServiceParameter_Notify message. (Same as step 26 of FIG. 3)

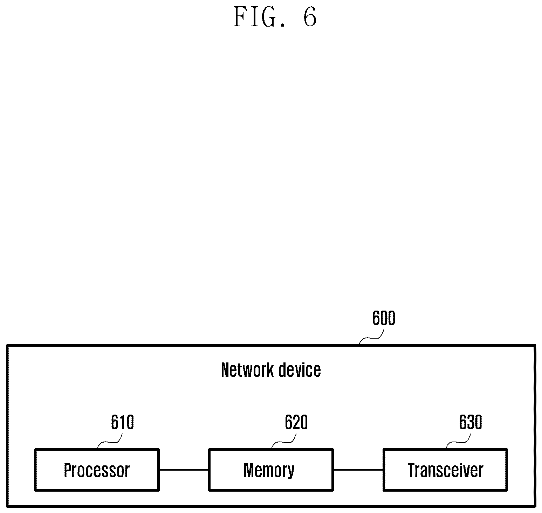

FIG. 6 is a diagram illustrating a configuration of a network device according to an embodiment of the disclosure.

A network entity of FIG. 6 may include one of network functions (NFs), such as a user equipment (UE), a RAN (base station), an access and management function (AMF), a policy control function (PCF), and a unified data management (UDR), described above in embodiments of FIGS. 1 to 5.

With reference to FIG. 6, the network device may include a processor 610, a memory 620, and a transceiver 630.

The processor 610 may control the overall operation of the network device. For example, the processor 610 may transmit and receive signals by controlling the transceiver 630. Also, the processor 610 may perform functions of a protocol stack required in communication specifications. To this end, the processor 610 may include at least one processor. Also, the processor 610 may control the network device to perform the above-described function of INTF.

The memory 620 may store data, such as a basic program, an application program, and configuration information for operating the network device. The memory 620 may be configured using a volatile memory, a nonvolatile memory, or a combination of the volatile memory and the nonvolatile memory. The memory 620 may provide the stored data upon request of the processor 610.

The transceiver 630 may perform functions for transmitting and receiving signals through a wired channel or a wireless channel. For example, the transceiver 630 may perform a conversion function between a baseband signal and a bitstream according to physical layer specifications of a system. For example, when transmitting data, the transceiver 630 may generate complex symbols by encoding and modulating a transmission bitstream. Also, when receiving data, the transceiver 630 may restore the baseband signal to a reception bitstream through demodulation and decoding. Also, the transceiver 630 may up-convert the baseband signal to a radio frequency (RF) band signal and then may transmit the same through an antenna and may down-convert the RF band signal received through the antenna to the baseband signal. To this end, the transceiver 630 may include a Tx filter, an Rx filter, an amplifier, a mixer, an oscillator, a digital-to-analog converter (DAC), and an analog-to-digital converter (ADC). Also, the transceiver 630 may include an antenna unit. The transceiver 630 may include at least one antenna array that includes a plurality of antenna elements. In terms of hardware, the transceiver 630 may include digital and analog circuits (e.g., radio frequency integrated circuit (RFIC)). Here, the digital and analog circuits may be implemented into a single package. Also, the transceiver 630 may include a plurality of RF chains. Also, the transceiver 630 may transmit and receive signals. To this end, the transceiver 630 may include at least one transceiver.

According to an embodiment of the disclosure, the processor 610 may control the overall operation of a corresponding network entity to perform an operation according to one or combination of two or more embodiments among the embodiments of FIGS. 1 to 5 described above. Meanwhile, the processor 610, the transceiver 630, and the memory 620 do not necessarily need to be implemented as separate modules and may be implemented into a single component, such as a single chip. The processor 610 may be an application processor (AP), a communication processor (CP), a circuit, an application-specific circuit, or at least one processor. The transceiver 1303 may include at least one communication interface that transmits and receives signals to and from another network entity in a wired/wireless manner.

According to an embodiment of the disclosure, the memory 620 may store data, such as a basic program, an application program, and configuration information for operating the corresponding network entity. Also, the memory 620 provides the stored data upon request of the processor 610. The memory 620 may be configured with storage media or combination of storage media, such as ROM, RAM, hard disks, CD-ROM, and DVD. Also, the memory 620 may be plural. Also, the processor 610 may perform at least one of the above-described embodiments based on a program for performing an operation according to at least one of the above-described embodiments of the disclosure stored in the memory 620.

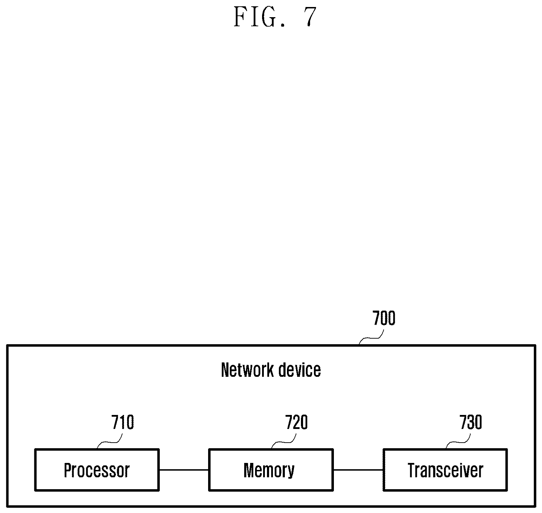

FIG. 7 is a block diagram illustrating a configuration of a base station according to embodiments of the disclosure. With reference to FIG. 7, the base station may include a processor 710, a memory 720, and a transceiver 730.

The processor 710 may control the overall operation of the base station. For example, the processor 710 may transmit and receive signals by controlling the transceiver 730. Also, the processor 710 may perform functions of a protocol stack required in communication specifications. To this end, the processor 710 may include at least one processor. Also, the processor 710 may control the base station to perform operations according to the above-described embodiments.

The memory 720 may store data, such as a basic program, an application program, and configuration information for operating the base station. The memory 720 may be configured using a volatile memory, a nonvolatile memory, or a combination of the volatile memory and the nonvolatile memory. The memory 720 may provide the stored data upon request of the processor 710.

The transceiver 730 may perform functions for transmitting and receiving signals through a wired channel or a wireless channel. For example, the transceiver 730 may perform a conversion function between a baseband signal and a bitstream according to physical layer specifications of a system. For example, when transmitting data, the transceiver 730 may generate complex symbols by encoding and modulating a transmission bitstream. Also, when receiving data, the transceiver 730 may restore the baseband signal to a reception bitstream through demodulation and decoding. Also, the transceiver 730 may up-convert the baseband signal to a radio frequency (RF) band signal and then may transmit the same through an antenna and may down-convert the RF band signal received through the antenna to the baseband signal. To this end, the transceiver 730 may include a Tx filter, an Rx filter, an amplifier, a mixer, an oscillator, a digital-to-analog converter (DAC), and an analog-to-digital converter (ADC). Also, the transceiver 730 may include an antenna unit. The transceiver 730 may include at least one antenna array that includes a plurality of antenna elements. In terms of hardware, the transceiver 730 may include digital and analog circuits (e.g., radio frequency integrated circuit (RFIC)). Here, the digital and analog circuits may be implemented into a single package. Also, the transceiver 730 may include a plurality of RF chains. Also, the transceiver 730 may transmit and receive signals. To this end, the transceiver 730 may include at least one transceiver.

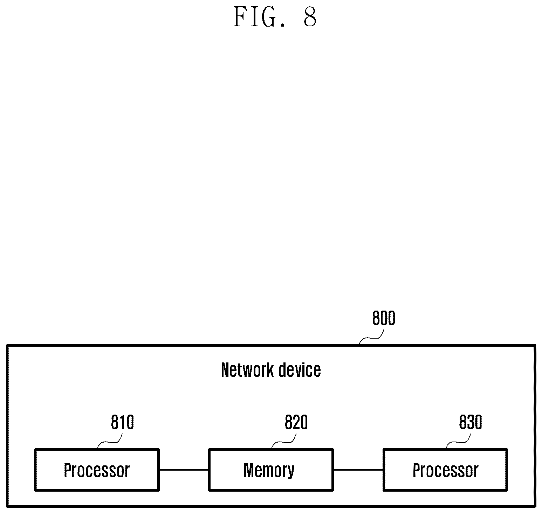

FIG. 8 is a diagram illustrating a configuration of a UE according to embodiments of the disclosure. With reference to FIG. 8, the UE may include a processor 810, a memory 820, and a transceiver 830.

The processor 810 may control the overall operation of the UE. For example, the processor 810 may transmit and receive signals by controlling the transceiver 830. Also, the processor 810 may perform functions of a protocol stack required in communication specifications. To this end, the processor 810 may include at least one processor. Also, the processor 810 may control the UE to perform operations according to the above-described embodiments.

The memory 820 may store data, such as a basic program, an application program, and configuration information for operating the UE. The memory 820 may be configured using a volatile memory, a nonvolatile memory, or a combination of the volatile memory and the nonvolatile memory. The memory 820 may provide the stored data upon request of the processor 810.

The transceiver 830 may perform functions for transmitting and receiving signals through a wired channel or a wireless channel. For example, the transceiver 830 may perform a conversion function between a baseband signal and a bitstream according to physical layer specifications of a system. For example, when transmitting data, the transceiver 830 may generate complex symbols by encoding and modulating a transmission bitstream. Also, when receiving data, the transceiver 830 may restore the baseband signal to a reception bitstream through demodulation and decoding. Also, the transceiver 830 may up-convert the baseband signal to a radio frequency (RF) band signal and then may transmit the same through an antenna and may down-convert the RF band signal received through the antenna to the baseband signal. To this end, the transceiver 830 may include a Tx filter, an Rx filter, an amplifier, a mixer, an oscillator, a digital-to-analog converter (DAC), and an analog-to-digital converter (ADC). Also, the transceiver 830 may include an antenna unit. The transceiver 830 may include at least one antenna array that includes a plurality of antenna elements. In terms of hardware, the transceiver 830 may include digital and analog circuits (e.g., radio frequency integrated circuit (RFIC)). Here, the digital and analog circuits may be implemented into a single package. Also, the transceiver 830 may include a plurality of RF chains. Also, the transceiver 830 may transmit and receive signals. To this end, the transceiver 830 may include at least one transceiver.

The methods according to the embodiments described in the claims or specification of the present invention may be implemented in the form of hardware, software, or a combination thereof.

When implemented in software, a computer-readable storage medium storing one or more programs (software modules) may be provided. The one or more programs stored in the computer-readable storage medium may be configured to be executable by one or more processors of an electronic device. The one or more programs may include instructions that cause the electronic device to execute the methods according to the embodiments described in the claims or specification of the disclosure.

Such a program (software module, software) may be stored in a random access memory, a nonvolatile memory including a flash memory, a read only memory (ROM), an electrically erasable programmable read only memory (EEPROM), a magnetic disc storage device, a compact disc ROM (CD-ROM), a digital versatile disc (DVD), other types of optical storage devices, or a magnetic cassette. Alternatively, such a program may be stored in a memory composed of a combination of some or all of them. In addition, a plurality of component memories may be included.

Further, the program may be stored in an attachable storage device that may be accessed through a communication network such as the Internet, an intranet, a local area network (LAN), a wide LAN (WLAN), or a storage area network (SAN), or through a communication network composed of a combination thereof. Such a storage device may access the device that carries out an embodiment of the disclosure through an external port. In addition, a separate storage device on a communication network may access the device that carries out an embodiment of the disclosure.

Meanwhile, embodiments disclosed in the present specification and drawings described above simply present specific examples to easily describe the content of the present invention and to help understanding thereof, and are not intended to limit the scope of the present invention. Therefore, the scope of the present invention should be interpreted to include all modifications and alterations derived from the technical spirit of the present invention in addition to the embodiments disclosed herein. Also, each of the embodiments may be combined and operated as needed.

## Claims

1. A method performed by a first network entity that performs a session management function and packet data network gateway-control (SMF+PGW-C) in a wireless communication system, the method comprising:
receiving, from a second network entity that performs a policy control function for a packet data unit session (PCF for a PDU session), a session management policy control update notify request message that includes user equipment (UE) policy information;
initiating a bearer modification procedure;
receiving the outcome of UE policy delivery from a UE; and
transmitting, to the second network entity, a session management (SM) policy control update request message that includes the outcome of UE policy delivery.

2. The method of claim 1, wherein the session management policy control update notify request message that includes UE policy information further includes a policy control report trigger (PCRT) related to the outcome of UE policy delivery through an evolved packet system (EPS).

3. The method of claim 1, wherein, in the case of receiving the outcome of UE policy delivery that includes rejection from the UE, the SM policy control update request message further includes the reason why the message is not delivered to the UE.

4. The method of claim 1, wherein the reason why the message is not delivered to the UE includes that the UE is temporally not reachable.

5. A method performed by a second network entity that performs a policy control function for a packet data unit session (PCF for a PDU session) in a wireless communication system, the method comprising:
receiving, from a third network entity that performs a policy control function for a user equipment (PCF for a UE), a UE policy control update notify request message that includes UE policy information;
transmitting, to a first network entity that performs a session management function and packet data network gateway-control (SMF+PGW-C), a session management policy control update notify request message that includes UE policy information;
receiving, from the first network entity, a session management policy control update request message that includes the outcome of UE policy delivery; and
transmitting, to a third network entity that performs a policy control function for a user equipment (PCF for a UE), a UE policy control update request message that includes the outcome of UE policy delivery.

6. The method of claim 5, wherein the UE policy control update notify request message further includes a policy control report trigger (PCRT) related to the outcome of UE policy delivery through an evolved packet system (EPS).

7. A method performed by a third network entity that performs a policy control function for a user equipment (PCF for a UE) in a wireless communication system, the method comprising:
transmitting, to a second network entity that performs a policy control function for a packet data unit session (PCF for a PDU session), a UE policy control update notify request message that includes UE policy information; and
receiving, from the second network entity, a UE policy control update request message that includes the outcome of UE policy delivery.

8. The method of claim 7, wherein the UE policy control update notify request message further includes a policy control report trigger (PCRT) related to the outcome of UE policy delivery through an evolved packet system (EPS).

9. A first network entity that performs a session management function and packet data network gateway-control (SMF+PGW-C) in a wireless communication system, the first network entity comprising:
a transceiver configured to transmit and receive signals; and
a controller,
wherein the controller is configured to,
receive, from a second network entity that performs a policy control function for a packet data unit session (PCF for a PDU session), a session management policy control update notify request message that includes user equipment (UE) policy information,
initiate a bearer modification procedure,
receive the outcome of UE policy delivery from a UE, and
transmit, to the second network entity, a session management policy control update request message that includes the outcome of UE policy delivery.

10. The first network entity of claim 9, wherein the session management policy control update notify request message that includes UE policy information further includes a policy control report trigger (PCRT) related to the outcome of UE policy delivery through an evolved packet system (EPS).

11. The first network entity of claim 9, wherein, in the case of receiving the outcome of UE policy delivery that includes rejection from the UE, the SM policy control update request message further includes the reason why the message is not delivered to the UE, and
the reason why the message is not delivered to the UE includes that the UE is temporally not reachable.

12. A second network entity that performs a policy control function for a packet data unit session (PCF for a PDU session) in a wireless communication system, the second network entity comprising:
a transceiver configured to transmit and receive signals; and
a controller,
wherein the controller is configured to,
receive, from a third network entity that performs a policy control function for a user equipment (PCF for a UE), a UE policy control update notify request message that includes UE policy information,
transmit, to a first network entity that performs a session management function and packet data network gateway-control (SMF+PGW-C), a session management policy control update notify request message that includes UE policy information,
receive, from the first network entity, a session management (SM) policy control update request message that includes the outcome of UE policy delivery, and
transmit, to a third network entity that performs a policy control function for a user equipment (PCF for a UE), a UE policy control update request message that includes the outcome of UE policy delivery.

13. The second network entity of claim 12, wherein the UE policy control update notify request message further includes a policy control report trigger (PCRT) related to the outcome of UE policy delivery through an evolved packet system (EPS).

14. A third network entity that performs a policy control function for a user equipment (PCF for a UE) in a wireless communication system, the third network entity comprising:
a transceiver configured to transmit and receive signals; and
a controller,
wherein the controller is configured to,
transmit, to a second network entity that performs a policy control function for a packet data unit session (PCF for a PDU session), a UE policy control update notify request message that includes UE policy information, and
receive, from the second network entity, a UE policy control update request message that includes the outcome of UE policy delivery.

15. The third network entity of claim 14, wherein the UE policy control update notify request message further includes a policy control report trigger (PCRT) related to the outcome of UE policy delivery through an evolved packet system (EPS).
